(19) Europäisches Patentamt
European Patent Office
Office européen des brevets

(11) **EP 3 790 176 A1**

(12) **EUROPÄISCHE PATENTANMELDUNG**

(43) Veröffentlichungstag:
**10.03.2021 Patentblatt 2021/10**

(51) Int Cl.:
*H02K 44/08* *(2006.01)*          *H02K 44/02* *(2006.01)*
*H02K 44/06* *(2006.01)*          *H02K 44/16* *(2006.01)*
*F04B 7/00* *(2006.01)*            *F04B 23/02* *(2006.01)*
*F04B 35/04* *(2006.01)*          *F04B 39/00* *(2006.01)*

(21) Anmeldenummer: 20204526.6

(22) Anmeldetag: **05.01.2017**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **05.01.2016 AT 500042016**

(62) Dokumentnummer(n) der früheren Anmeldung(en)
nach Art. 76 EPÜ:
**17700883.6 / 3 400 642**

(71) Anmelder: **Schneider, Alexander
1030 Wien (AT)**

(72) Erfinder: **Schneider, Alexander
1030 Wien (AT)**

(74) Vertreter: **Sonn & Partner Patentanwälte
Riemergasse 14
1010 Wien (AT)**

Bemerkungen:
Diese Anmeldung ist am 29-10-2020 als
Teilanmeldung zu der unter INID-Code 62 erwähnten
Anmeldung eingereicht worden.

(54) **DRUCKLUFTSPEICHERKRAFTWERK**

(57) Druckluftspeicherkraftwerk (100) mit einem Druckluftspeicher (2), einem elektrischen Ein-/Ausgangskreis (4) mit Klemmen, Kompressions- und Expansionsmitteln, die eine Kolbenpumpe (200) mit einem flüssigen Kolben aufweisen, die zwischen einem Pumpbetrieb und einem Generatorbetrieb umschaltbar ist, Elektromagnetmitteln ($L_{0A}$, $L_{0B}$, $L_{1A}$, $L_{1B}$) und mit einem Kern aus Trafoblechen, wobei zwei innere (b, c) und zwei äußere (a, d) Schenkel und ein zumindest abschnittsweise halbkreisförmiger Spalt (101) vorgesehen sind, der mit einer elektrisch und thermisch leitfähigen Flüssigkeit befüllt ist, welche Flüssigkeit nicht magnetisierbar ist und den flüssigen Kolben bildet, wobei an den inneren Schenkeln (b, c) Kupferplatten angebracht sind, die gemeinsam mit der Flüssigkeit im Spalt (101) einen elektrischen Kurzschluss bilden, wobei die inneren Schenkeln (b, c) einen Transformator mit einer primärseitigen Wicklung ($L_1$) mit einem sekundärseitigen Kurzschluss bilden, wobei an den äußeren Schenkeln (a, d) Gleichfeld-Spulen ($L_{0A}$, $L_{0B}$) vorgesehen sind, die baugleich hinsichtlich Windungszahl und Drahtstärke sind und ein reines Gleichfeld ist erzeugen.

Fig. 24

EP 3 790 176 A1

**Beschreibung**

Die Offenbarung betrifft ein Druckluftspeicherkraftwerk mit einem Druckluftspeicher, mit einem elektrischen Ein-/Ausgangskreis, mit Kompressions- und Expansionsmitteln, die eine Kolbenpumpe aufweisen, die zwischen einem Pumpbetrieb und einem Generatorbetrieb umschaltbar ist, und mit Elektromagnetmitteln mit einem Kern, der eine geschlossene Schleife mit zwei parallelen geraden Kernteilen bildet, um die Spulen gewickelt sind. Ein derartiges Druckluftspeicherkraftwerk ist aus WO 2014/169312 A1 bekannt.

Um den Klimawandel zu stoppen, sollen erneuerbare Energieträger einen höheren Anteil im Energiemix erhalten. Das Problem dabei ist, dass das Energieangebot von Sonne und Wind nicht zeitgleich mit dem Energiebedarf ist. Wirtschaftliche Energiespeicher sind nicht in ausreichender Menge vorhanden. Daher sind nach wie vor kalorische Kraftwerke und nukleare Kraftwerke im Einsatz, um "Regelenergie" bereitzustellen. Es besteht daher ein Bedarf, den Anteil erneuerbarer Energie zu erhöhen und die Abhängigkeit von kalorischen und nuklearen Kraftwerken als "Regelenergie" bzw. "Ausgleichsenergie" zu vermindern.

Bekannt ist es, zur Speicherung von elektrischer Energie Druckluft und Wärme zu speichern. Frühere Druckluftspeicherkraftwerke benützen geologisch geeignete unterirdische Hohlräume; sie sind daher in der Standortwahl, aber auch hinsichtlich des maximalen Arbeitsdruckes eingeschränkt. Vorteilhafter sind daher künstlich herstellte Druckluftspeicher, wie etwa gemäß WO 2014/169312 A1, die einen wesentlich höheren Arbeitsdruck erlauben. Dadurch ist die Energiedichte höher, die Bauweise kompakter und die Standortwahl leichter. Früher vorgeschlagene Druckluftspeicherkraftwerke speichern nicht oder nur teilweise die bei der Kompression entstehende Wärme, und sie müssen daher im Generatorbetrieb Wärme von außen, z.B. durch Verbrennung von Gasen, zuführen, damit der Generator nicht einfriert. Die Wirkungsgrade derartiger früherer Druckluftspeicherkraftwerke sind daher zu gering, um eine wichtige wirtschaftliche Rolle in der "Energiewende" zu spielen.

Die EP 2 450 549 A2 beschreibt ein Druckstufen-Wärme-Speicherkraftwerk bzw. Energiespeicherverfahren zum zeitweiligen Speichern von Energie in Form von Druckenergie in einem kompressiblen Medium und in Form von Wärmeenergie. Diese Technik ermöglicht einen höheren thermodynamischen Wirkungsgrad als frühere Verfahren, wie sie z.B. in DE 2 636 417 A1, DE 2 541 501 A1, DD 118455 A1, DE 2 536 447 B2, DE 2 615 439 A1, DE 3 428 041 A1, EP 364 106 B1, US 4,630,436, US 4,523,432 und US 4,765,142 beschrieben sind. Dieser höhere Wirkungsgrad soll durch eine flexible Anordnung von mehreren Kompressoren, mehreren Wärmetauschvorrichtungen und mehreren Expansionsvorrichtungen, die durch zahlreiche Rohrleitungen unabhängig voneinander beliebig verbunden werden können, erreicht werden. Als vorteilhaft soll sich dabei die Möglichkeit erweisen, dass die Anzahl der Kompressionsvorrichtungen ungleich der Anzahl der Expansionsvorrichtungen sein kann. Im Gegensatz zu einer vergleichbaren Anordnung mit nur einer Kompressionsstufe und einer Expansionsstufe soll durch die mehrstufige Anordnung mit zwischengeschalteten Wärmetauschern der Wirkungsgrad gesteigert werden. Die Expansion und Kompression wird als adiabater Prozess angenommen, die mehrstufige Anordnung von Wärmetauschern und die Möglichkeit, überschüssige Energie von außen einzuspeisen, soll die Temperaturverluste bzw. die Energieverluste minimieren. Nachteilig ist dabei die höhere Komplexität der Anlage, was die Kosten für die Errichtung und den Betrieb erhöht. Die Wirtschaftlichkeit einer solchen Anlage ist u.a. von der Verfügbarkeit überschüssiger (Wärme-)Energie abhängig.

Ähnlich ist die in EP 2 489 840 A1 beschriebene Anlage zu bewerten, wobei hier ein isothermer Prozess angestrebt wird. Die Wärmeenergie wird nicht gespeichert, sondern mit der Umgebung ausgetauscht. Der maximale Speicherdruck beträgt 300 bar. Wenn keine externe Wärmequelle beim Entladen zur Verfügung steht, ist der Wirkungsgrad mit 70% begrenzt. Dadurch ist die Standortwahl und die gespeicherte Energiedichte begrenzt. Angesichts des beträchtlichen Aufwands zur Errichtung der Anlage im Verhältnis zur Leistung und zur gespeicherten Energiemenge ist die Rentabilität fraglich.

Um nach Möglichkeit die gesamte bei der Kompression entstehende Wärme zu speichern und bei der Expansion möglichst vollständig wieder zu nützen, wurde in der WO 2014/169312 A1 ein Druckluftspeicherkraftwerk vorgeschlagen, das als Kern eine Kolbenmaschine aufweist, die sowohl als Pumpe als auch als Generator arbeitet und die flüssige Kolben besitzt, die im Pumpbetrieb induktiv angetrieben werden, sind auch aus der DE 19 728 199 A1 bekannt, die einen Verdichter für Kälteanlagen offenbart, bei dem ein Magnetofluid durch einen Elektromagneten oder einen Permanentmagneten angetrieben wird. Demgegenüber bestehen die Kolben gemäß WO 2014/169312 A1 aus einer elektrisch und thermisch sehr gut leitfähigen Flüssigkeit, wie z.B. eine Gallium-Indium-Zinn Legierung, und die "Zylinder" sind kommunizierende Gefäße, die die Flüssigkeit enthalten. Auch wird im Unterschied zur DE 19 728 199 A1 der magnetische Fluss durch einen Magnetkern erhöht, der insbesondere die Form einer geschlossenen Schleife hat. Dabei wird im flüssigen Kolben ein Stromfluss induziert und die damit verbundene Lorentzkraft zum Antrieb genutzt. Das erlaubt höhere Leistungsdichten als in der Kolbenmaschine gemäß DE 19 728 199 A1, die nicht als Kraftwerk einsetzbar ist.

In der US 2,258,415 A wird ein Verdichter für Kälteanlagen beschrieben, der flüssige Kolben enthält, die induktiv angetrieben werden. Dieser Verdichter arbeitet mit Quecksilber als elektrisch leitfähige Flüssigkeit, das allerdings giftig ist. Der Verdichter hat eine U-Form, jedoch ist der Magnetkern gemäß der US 2,258,415 A nicht parallel zur U-Form als geschlossene Schleife ausgeführt, sondern er steht senkrecht zu dieser. Auch ist von Nachteil, dass der Strom, der senkrecht zum Magnetfeld laufen muss, um die Kolbenflüssigkeit zu bewegen, nicht durch das primäre Magnetfeld in der Kolbenflüssigkeit induziert wird, sondern über eine sekundäre Trafowicklung extern erzeugt und über seitliche Elektroden in den flüssigen Kolben eingespeist wird. Das hat den Nachteil, dass die Überlagerung von sekundär eingespeistem Strom und primär induziertem Strom eine Phasenverschiebung zwischen Magnetfeld und Summenstrom bewirkt, die die Wirkungsweise der Maschine beeinträchtigt. Um diese Beeinträchtigung zu minimieren, müssen die Pole des Magneten und die Elektroden in mehrere parallele Segmente unterteilt werden. Um eine Pendelbewegung der flüssigen Kolben im U-förmigen Gefäß zu bewirken, ist eine aufwendige Schaltung notwendig, die den Stromfluss durch die Spulen der zwei Schenkel periodisch umpolt. Weiters ist das Prinzip der US 2,258,415 A für den Einsatz als Kühlaggregat, nicht aber zur Speicherung von Energie geeignet.

Gemäß der vorgenannten WO 2014/169312 A treibt Druckluft im Generatorbetrieb die Kolben an, wobei die Kolben den Widerstand einer Erregerspannung überwinden und an den Klemmen der Spulenwicklung elektrische Arbeit leisten in der Art eines magnetohydrodynamischen (MHD-) Generators. Ein klassischer MHD-Generator hat einen geringen Wirkungsgrad, weil ein heißes Fluid oder Plasma durch einen Kanal strömt, wobei ein großer Teil der Wärmeenergie nicht genutzt wird. Eine verbesserte Form des MHD-Generators ist in der US 3,517,229 A geoffenbart, die in gewisser Weise das strömungsmaschinelle (Turbo-)Äquivalent zu einer Maschine etwa gemäß WO 2014/169312 A1 offenbart. Die US 3,517,229 A gibt allerdings keinen Hinweis darauf, ob und wie die bei der Kompression entstehende Wärme zwischengespeichert und bei der Stromerzeugung genutzt wird. Es ist jedoch wünschenswert, die bei der Kompression entstehende Wärme zu speichern und bei der Entladung zu nutzen, so dass beide Prozesse annähernd isotherm ablaufen: Durch die laufende Umwälzung der Kolbenflüssigkeit findet ein vorteilhafter Wärmeaustausch zwischen dem Hubraum der Maschine und dem Wärmespeicher statt, der die bei der Kompression entstehende Wärme effektiv abführt und das Vereisen des Generators bei der Expansion verhindert. Das ermöglicht einen hohen Wirkungsgrad. Nur ein Speicherkraftwerk mit Wirkungsgraden von 90 Prozent und mehr ist unter heutigen Bedingungen am Strommarkt wirtschaftlich zu betreiben.

Die US 2008/072597 A1 offenbart eine Kolbenpumpe mit Kolben aus einer elektrisch leitfähigen Flüssigkeit, die in einem MHD-Generator elektrische Energie abgibt. Dabei handelt es sich um einen Stirling-Prozess, der außer dem flüssigen Kolben keine mechanisch bewegten Teile enthält. Das Verfahren ist simpel und robust, es gestattet die Umwandlung von Wärme in elektrische Energie. Es bleibt allerdings offen, wie elektrische Energie schnell mit hoher Leistung gespeichert und schnell mit hoher Leistung wieder aus dem Speicher entnommen werden kann. Daher ist auch diese Technik nicht geeignet zum Bau eines Speicherkraftwerks.

Die WO 2008/139267 A1 offenbart eine Anlage zur Speicherung von elektrischer Energie in Form von Druckluft, wobei flüssige Kolben zur Kompression/Expansion eingesetzt werden. Die Kolbenflüssigkeit ist dabei nicht elektrisch leitfähig und wird nicht induktiv angetrieben, sondern konventionell mit einer Hydraulikpumpe, die ihrerseits mit einem Elektromotor/Generator verbunden ist. Um die Kompression/Expansion möglichst isotherm zu gestalten, wird die Kolbenflüssigkeit von oben in vielen dünnen Strahlen ähnlich wie in einer Dusche in den Hydraulikzylinder gepresst. Dadurch wird die verdichtete/expandierende Luft effektiv gekühlt bzw. erwärmt. Nachteilig erscheint dabei die Tatsache, dass die bei der Kompression entstehende Wärme nicht gespeichert, sondern mittels Wärmetauscher an die Umgebungsluft abgegeben wird, wozu auch noch ein Ventilator vorgesehen ist, der Energie verbraucht. Dadurch ist der Wirkungsgrad von der Umgebungstemperatur abhängig. Im Sommer ist die Wärmeabfuhr bei der Kompression aufwändiger, im Winter ist die Wärmezufuhr bei der Expansion aufwändiger. Insgesamt erscheinen der mechanische Aufwand und damit die Errichtungskosten hoch im Verhältnis zur Leistungsdichte der Anlage, einerseits weil der Prozess langsam ablaufen muss, um isotherm zu sein, und andererseits, weil das Volumen der Anlage groß sein muss.

Die Offenbarung beschreibt ein Druckluftspeicherkraftwerk wie eingangs angegeben vor, das sich dadurch auszeichnet, dass zwischen den geraden Kernteilen eine magnetisch leitfähige Brücke zur Verstärkung der radial aus dem Kern austretenden Komponente der Induktion angeordnet ist. Dabei ist es weiters von Vorteil, wenn die Brücke aus weichmagnetischem Material gebildet ist, und/oder wenn die Brücke eine Hilfswicklung aufweist. Die Erfindung sieht ein Druckluftspeicherkraftwerk gemäß Anspruch 1 vor. Im Folgenden wird zur Erläuterung ein Druckluftspeicherkraftwerk einer ersten Ausführungsform beschrieben.

Es ist günstig, wenn zwischen der Brücke und dem Kern ein Spalt freigelassen ist. Hierbei ist es auch zweckmäßig, wenn es eine Phasenverschiebung zwischen der Induktion im Spalt und dem um den Kern herum laufenden Sekundärstrom gibt; und weiters, wenn die Phasenverschiebung zwischen der Induktion im Spalt und dem Sekundärstrom den Kolben zu einer pumpenden Bewegung antreibt. Von Vorteil ist es hier auch, wenn der Kolben durch eine magnetisierbare Kolbenflüssigkeit zur Verstärkung der Induktion gebildet ist, wobei es überdies günstig ist, wenn in der Kolbenflüssigkeit magnetische Nanopartikel enthalten sind. Außerdem ist es vorteilhaft, wenn der Kolben nicht nur durch Induktion, sondern auch durch eine (Druckluft-)Feder beschleunigt wird, weil durch die so erfolgende Einführung von Blindleistung auch die Wirkleistung maximiert wird.

Mit der Ausführungsform werden u.a. folgende Vorteile erzielt:

1. Eine Verstärkung der radialen Induktion bzw. der Kolbenkraft durch Einfügen der Brücke mit oder ohne zusätzliche Wicklung(en)

2. Die Erzielung einer verbesserten Pumpbewegung durch optimale Phasenverschiebung zwischen Induktion und sekundärem Strom.

3. Eine Verstärkung der radialen Induktion bzw. der Kolbenkraft durch eine magnetisierbare Kolbenflüssigkeit.

4. Eine Optimierung der Pumpenleistung durch zusätzliche mechanische Blindleistung (Erhöhung der kinetischen Energie des Kolbens und Einführung einer Feder zur Speicherung von potentieller Energie).

Zweckmäßigerweise sind alle mechanisch festen Teile mit Ausnahme der Spulen, des Kerns und einer magnetischen Ventilsteuerung aus elektrisch nicht leitendem Material, z.B. Keramik, ausgeführt, um Wirbelstromverluste und Ummagnetisierungsverluste zu minimieren; in entsprechender Weise kann auch die Aufhängung der Maschine, das Gestell, aus einem solchen elektrisch nichtleitendem Material, wie insbesondere Keramik, hergestellt sein.

Zur Spannungsabgabe kann ein elektrischer Kondensator vorgesehen sein, und dieser ist bevorzugt als Plattenkondensator mit kammförmig ineinandergreifenden Platten ausgeführt, die durch ein geeignetes Dielektrikum, z.B. Keramik, Glas oder Kunststoff, getrennt und dabei so auf Abstand gehalten sind, dass für den Kondensator eine Spannungsfestigkeit von 220 kV erzielt wird, wobei im Zusammenspiel mit den Spulen eine Resonanzfrequenz von z.B. 50 Hertz erhalten wird.

Das vorliegende Druckluftspeicherkraftwerk ist einfach im Aufbau, da der Kern gleichzeitig Motor, Kompressor, Expander und Generator ist. Es ist außerdem einfach im Betrieb, wobei bis auf die Ventile keine Verschleiß-Komponenten enthalten sind. Unter der Annahme, dass alle Prozesse verlustfrei ablaufen, ist es möglich, den thermodynamischen Wirkungsgrad beliebig nahe an 100% heranzuführen, das allerdings auf Kosten der Leistungsaufnahme bzw. Leistungsabgabe. Der flüssige Kolben mit Umwälzung der Kolbenflüssigkeit verbessert den Wärmeübergang zwischen der Druckluft im Hubraum und der Umgebung des Hubraums. Die Kompression/Expansion ist kein rein adiabater Vorgang, sondern ein polytroper. Durch geeignete Feinabstimmung des Kolbenhubraums als Funktion des Speicherdrucks (z.B. durch Veränderung der Gesamtmenge an Kolbenflüssigkeit im System oder durch Zufuhr/Abfuhr von hydraulischer Flüssigkeit von/nach außen) kann die Verweildauer der Druckluft im Hubraum beliebig verändert werden. Jedes differentielle Volumenelement der zu komprimierenden/expandierenden Luftmenge kann nicht nur einmal, sondern n mal komprimiert/expandiert werden, bevor es in den Speicher bzw. in die Umgebung entlassen wird. Je höher der Wert für n gewählt wird, d.h. je länger das Gas im Hubraum verweilt, desto öfter kann es mit frischer, umgewälzter Kolbenflüssigkeit Wärme austauschen. Je größer der Wert für n gewählt wird, desto mehr nähert sich die polytrope Kennlinie einer Isotherme an. Isotherme Kompression und Expansion ist bekanntermaßen gleichbedeutend mit einem Wirkungsgrad von 100%. Je höher der Wert für n gewählt wird, desto geringer ist der Energieaustausch zwischen Hubraum und Umgebung pro Kolbenhub, desto geringer ist die "Ausbeute" an gespeicherter Druckluftmenge pro Kolbenhub, desto länger dauert es, bis der Speicher geladen/entladen ist. Bei einem hohen Wert für n gibt es einen hohen Anteil an thermodynamischer "Blindleistung", die im System zwischen den Kolben hin und her pendelt, bzw. die zwischen maximaler Druckenergie im Gas (Luft) und maximaler kinetischer Energie im Kolben hin und her pendelt. Der Wärmeübergang/Wirkungsgrad kann außerdem durch Vergrößerung der Kolbenfläche im Verhältnis zum Kolbenhub verbessert werden. Die vorliegende Konstruktion erlaubt durch Feinjustierung einiger Parameter den optimalen Betriebspunkt im Sinne größtmöglicher Wirtschaftlichkeit einzustellen. Der optimale Kompromiss zwischen Leistung und Wirkungsgrad wird auch durch die Preise an der Strombörse bestimmt. Es ist möglich, bei Änderungen der Strompreise den jeweils optimalen Betriebspunkt jeweils neu einzustellen.

Bei der vorliegenden Anlage, also dem Druckluftspeicherkraftwerk, kann die magnetisch leitfähige Brücke mit einem geschichteten Transformatorblech aufgebaut sein. Dabei ist es aus Festigkeitsgründen von Vorteil, wenn zumindest zwischen Blechen eine formgleiche Stahlplatte angeordnet ist. Weiters ist vorteilhaft, wenn das Blech so geschnitten ist, dass sich durch einfaches Stapeln gleichförmiger Bleche eine vorteilhafte Geometrie für Kern, Brücke und Spalt ergibt.

Zur Erleichterung der Herstellung des Aufbaues im Hinblick auf die beim vorliegenden Druckluftspeicherkraftwerk zumeist gegebenen großen Dimensionen ist es auch günstig, wenn zumindest ein um einen geschlossenen Kern herumgebauter Spulenkörper, z.B. in Form von Quadern oder von in Platten eingelegten Kupferelementen, vorgesehen ist.

Weiters ist es günstig, wenn der Kolben durch eine magnetisierbare Kolbenflüssigkeit zur Verstärkung der Induktion gebildet ist. Dabei kann die Kolbenflüssigkeit bevorzugt magnetische Nanopartikel enthalten. Weiters ist es von Vorteil, wenn die Kolbenflüssigkeit ein Natrium-Kalium-Eutektikum aufweist.

Von Vorteil ist auch eine Ausbildung des Druckluftspeicherkraftwerks mit einem frei schwingenden mechanischen System und einem frei schwingenden elektromagnetischen System, wobei die beiden Systeme induktiv miteinander verkoppelt sind.

In vorteilhafter Weise kann auch vorgesehen werden, wenn die Induktion im Spalt einen Gleichanteil und einen Wechselanteil bei der doppelten Netzfrequenz aufweist und/oder wenn der elektrische Ein-/Ausgangskreis einen Parallelresonanzzweipol aufweist, dessen Induktivität durch den um den Kern gebauten Spulenkörper gebildet ist und dessen Kapazität durch zwei parallele Kondensatoren (C, C')gebildet ist, von denen einer zu- und wegschaltbar ist, wodurch die Resonanzfrequenz wahlweise bei der Netzfrequenz oder einer anderen Frequenz zu liegen kommt.

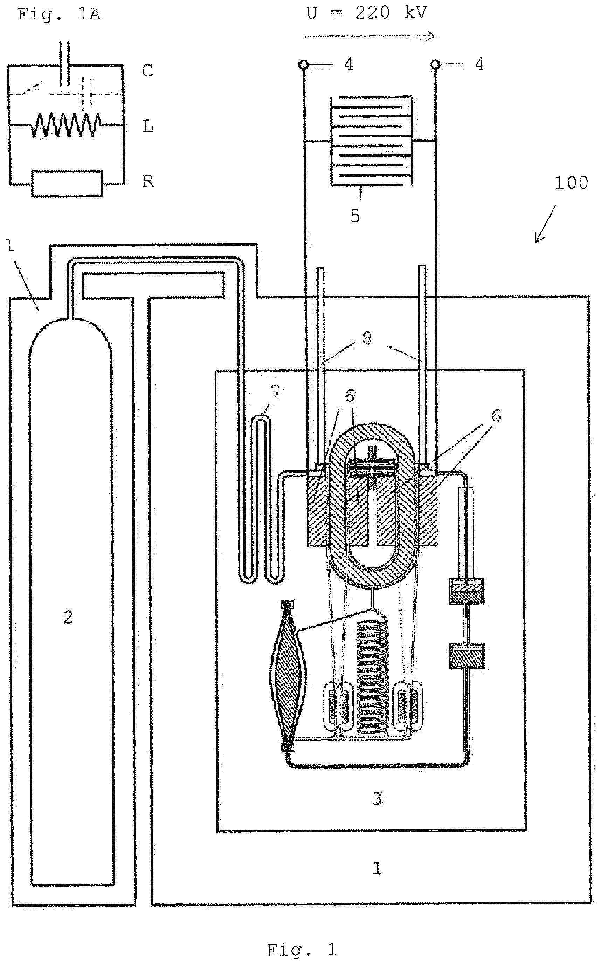

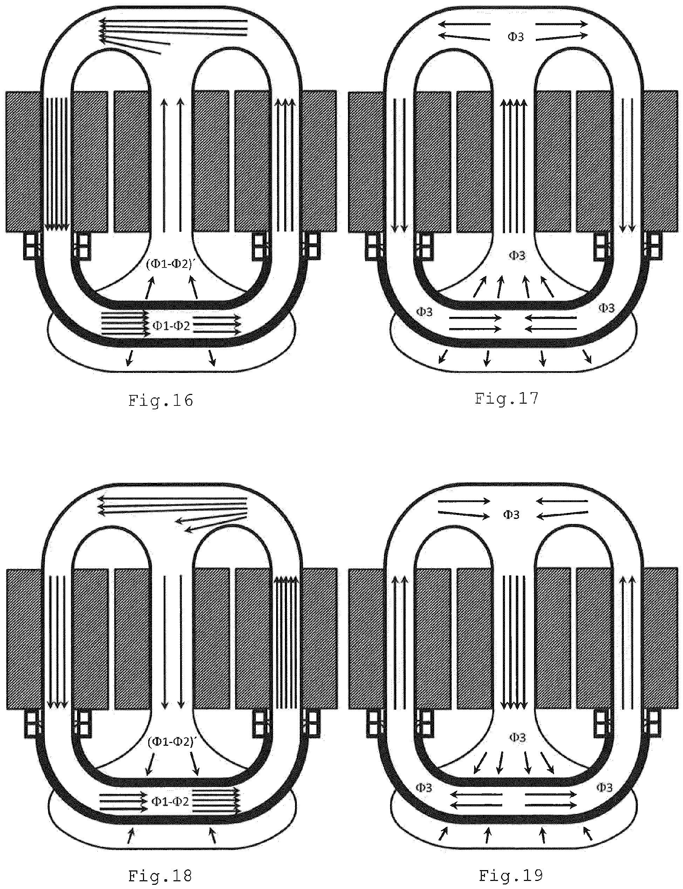

Die Erfindung wird nachfolgend anhand der Zeichnungen und unter Bezugnahme auf bevorzugte Ausführungsbeispiele, auf die sie jedoch nicht beschränkt sein soll, noch weiter erläutert. Die Figuren Fig. 1 bis Fig. 23 sowie Fig. 27 bis Fig. 31 zeigen zum besseren Verständnis nicht erfindungsgemäße Ausführungsformen. In den Zeichnungen zeigen im Einzelnen:

　　Fig. 1 eine schematische Darstellung eines Druckluftspeicherkraftwerks von an sich bekannter Bauart;
　　Fig. 1A ein zugehöriges elektrisches Ersatzschaltbild zusammen mit einer bevorzugten Modifikation;
　　Fig. 2 schematisch die Kolbenmaschine ("Induktionspumpe") dieses Druckluftspeicherkraftwerks mit ihren peripheren Komponenten Hubraumregler und Wärmetauschkreislauf;
　　Fig. 3 schematisch diese Kolbenmaschine ("Induktionspumpe") vergrößert und ohne periphere Komponenten;
　　Fig. 4 einen Querschnitt durch den weichmagnetischen Kern, die Spulenwicklung und den inneren und den äußeren Luftspalt dieser Kolbenmaschine, gemäß der Linie IV-IV in Fig. 3;
　　Fig. 5 einen Querschnitt durch den weichmagnetischen Kern, den Hubraum und das Planetengetriebe jener Vorrichtung der Kolbenmaschine, die zwischen Pumpbetrieb und Generatorbetrieb umschaltet, gemäß der Linie V-V in Fig. 3;
　　Fig. 6 in einer Darstellung ähnlich Fig. 3 eine verbesserte Kolbenmaschine bzw. Induktionspumpe;
　　Fig. 7 eine Darstellung wie Fig. 6, jedoch mit Veranschaulichung der magnetischen Flüsse;
　　Fig. 8 ein zu Fig. 7 gehöriges Zeigerdiagramm von Strömen bzw. magnetischen Flüssen;
　　Fig. 9 in einer Darstellung ähnlich Fig. 7 eine Drehstromvariante;
　　Fig. 10 ein zugehöriges Zeigerdiagramm der elektrischen Spannungen;
　　Fig. 11 ein zugehöriges Zeigerdiagramm der magnetischen Flüsse;
　　Fig. 12 und Fig. 13 den Feldlinienverlauf der magnetischen Flüsse in einer ersten Viertel-Periode, wobei die Lorentzkraft von rechts nach links (gemäß der Darstellung der Zeichnung) wirkt;
　　Fig. 14 und 15 den Feldlinienverlauf der magnetischen Flüsse in der zweiten Viertel-Periode, wobei nun die Lorentzkraft von links nach rechts wirkt;
　　Fig. 16 und Fig. 17 den Feldlinienverlauf der magnetischen Flüsse in der dritten Viertel-Periode, wobei die Lorentzkraft wiederum von rechts nach links wirkt;
　　Fig. 18 und Fig. 19 den Feldlinienverlauf der magnetischen Flüsse in der vierten Viertel-Periode, wobei die Lorentzkraft wieder von links nach rechts wirkt;
　　Fig. 20 und Fig. 21 schematische Darstellungen eines Druckluftspeicherkraftwerks in verschiedenen Betriebsstellungen;
　　Fig. 22 und 23 in schematischen Darstellungen jener von Fig. 21 die Verhältnisse bei Verwendung eines zylindersymetrischen Druckventils in einer Anordnung vergleichbar jener gemäß Fig. 21, wobei in Fig. 22 in Schließstellung und die Fig. 23 eine angehobene Stellung des Druckventils und der Erzeugung eines komprimierten Gasvolumens veranschaulicht sind;
　　Fig. 24 und 25 zwei Varianten für den Aufbau des Kerns, einmal (Typ 1) mit einfacher Wicklung und zum anderen mit mehrfacher Wicklung L1 bis L7;
　　Fig. 26 eine schematische schaubildliche Darstellung eines Kerns aus geschichteten Transformatorblech samt eingelegter Stahlplatte zwischen Trafoblechen, weiters in symbolischer Darstellung zwei Kühlkreisläufe, wobei die Kolbenflüssigkeit im Spalt entlang der z-Achse bewegt wird;
　　Fig. 27 ein Phasenportrait der vorliegenden Anlage im Leerlauf;
　　die Fig. 28 und Fig. 29 je ein entsprechendes Phasenportrait im Pumpbetrieb (Fig. 28) bzw. im Generatorbetrieb (Fig. 29);
　　Fig. 30 ein Schema einer dreiphasigen Anordnung, mit drei Koppeltransformatoren und den mit ihnen verbundenen Wicklungen auf entsprechenden Schenkeln einer Induktionspumpe; und
　　Fig. 31 schematisch eine Draufsicht auf eine Reihe von drei zylindrischen Druckluftfedern.

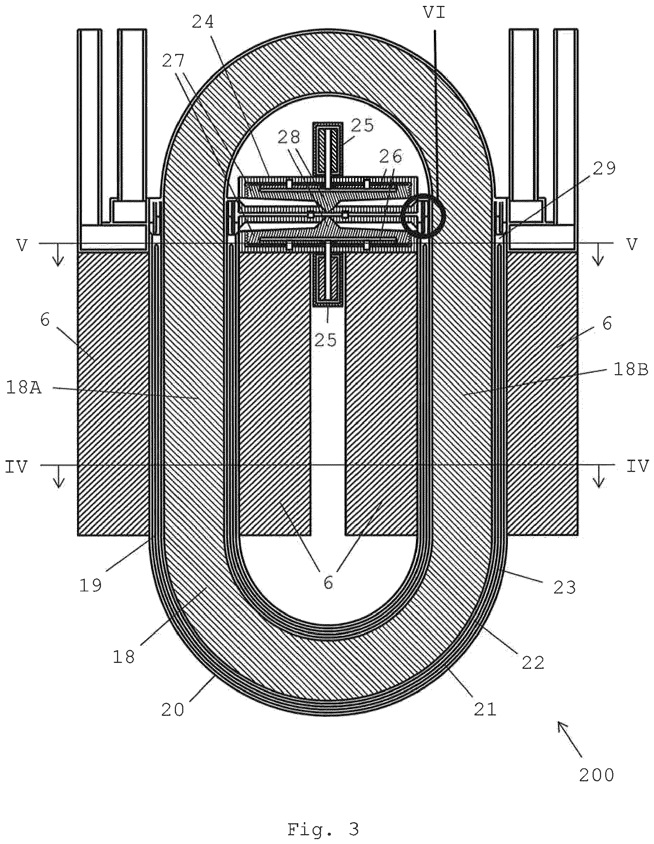

In Fig. 1 ist ein Beispiel eines bekannten Druckluftspeicherkraftwerks 100 mit einer die Funktion eines Kompressors und Expanders ausübenden Kolbenpumpe 200 (Fig. 3) schematisch dargestellt: Eine wärmeisolierende Schicht 1 umgibt einen (künstlichen) Druckluftspeicher 2 und eine wärmespeichernde Flüssigkeit 3, die z.B. aus Wasser besteht. Die Kolbenpumpe 200 ist in der Flüssigkeit eingetaucht und allseitig von dieser umgeben.

Aus elektrotechnischer Sicht liegt ein R-L-C Parallelschwingkreis vor; vgl. Fig. 1A. An externen Klemmen 4 als Eingangs- und Ausgangskreis wird eine 220 kV-Wechselspannung U angelegt. Die Kapazität C wird durch einen Kondensator 5 gebildet, der außerhalb der wärmeisolierenden Schicht 1 angeordnet ist. Der Kondensator 5 ist als geschichteter Plattenkondensator mit einer Spannungsfestigkeit deutlich höher als 220 kV ausgeführt. Die Platten des Kondensators 5 sind so verbunden, dass die Pole des Kondensators 5 kammartig ineinander greifen und das Dielektrikum einen mäanderförmigen Raum zwischen den Elektroden ausfüllt. Die Induktivität L wird durch eine spulenförmige Wicklung 6 der Kolbenpumpe 200 gebildet. Der elektrische Wirkwiderstand R ergibt sich durch die mechanische Arbeit, die bei der Kompression der Luft geleistet wird. Die Induktivität L der Spule 6 und die Kapazität C des Kondensators 5 sind so dimensioniert, dass die Resonanzfrequenz der Netzfrequenz von 50 Hertz (oder ggf. 60 Hertz, z.B. in den USA, oder einer anderen gewählten Betriebsfrequenz) entspricht.

Der als Ein-/Ausgangskreis vorgesehene Parallelresonanzzweipol hat eine Induktivität L, die durch den um den Kern gebauten Spulenkörper gebildet ist, und dessen Kapazität durch zwei parallele Kondensatoren gebildet wird, von denen einer - C' in Fig. 1A - zu- und weggeschaltet werden kann, wodurch die Resonanzfrequenz wahlweise bei der Netzfrequenz oder einer anderen Frequenz zu liegen kommt.

Das Druckluftspeicherkraftwerk 100 arbeitet somit ohne Spannungsumsetzung direkt mit 220kV Wechselspannung am Eingang/Ausgang 4, wozu es günstig ist, wenn alle Teile, insbesondere die Spulenwicklung 6, sorgfältig doppelt isoliert und wasserdicht ausgeführt sind.

Die komprimierte Luft strömt durch eine Druckrohrleitung 7 zwischen der Kolbenpumpe 200 und dem Druckluftspeicher 2. Um den Wärmeaustausch zu optimieren, ist die Druckrohrleitung 7 innerhalb des Wärmespeichers 3 mäanderförmig ausgeführt. Eine Rohrleitung 8 verbindet die Kolbenpumpe 200 mit der Umgebungsluft. Um die Lärmabgabe zu minimieren, kann die nach außen führende Rohrleitung 8 an der Innenseite mit einem schalldämpfenden Material beschichtet sein. Außerdem wirken der Wärmespeicher 3 und die Wärmeisolierung 1 gleichzeitig als Schalldämmung.

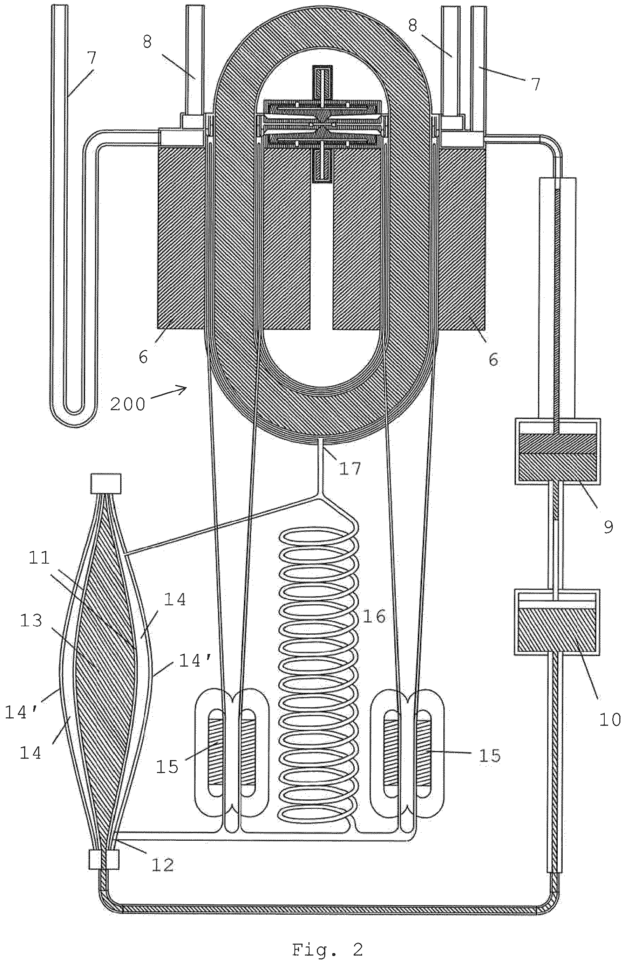

In Fig. 2 ist die bekannte Kolbenpumpe 200 samt ihren peripheren Komponenten schematisch dargestellt. Ein Druckwandler 9 untersetzt den Arbeitsdruck der komprimierten Luft (Druckrohrleitung 7) proportional auf den Druck einer hydraulischen Flüssigkeit 10, die den Druck auf zwei Membranfedern 11 weitergibt. Die Membranfedern 11 unterteilen einen diskusförmigen Körper 12 in einen inneren (mittleren) Bereich 13 und zwei äußere Bereiche 14 (rechts und links des mittleren Bereichs 13).

Unterhalb von zwei Schenkeln der Kolbenpumpe 200 befinden sich zwei kleine Umwälzpumpen 15. Diese Umwälzpumpen 15 treiben eine noch näher zu beschreibende Kolbenflüssigkeit durch einen Wärmetauscherkreislauf, der den rechten und den linken Schenkel der Kolbenpumpe 200 in einer geraden Leitung nach unten fortsetzt, durch die Umwälzpumpen 15 führt und sich danach in zwei Leitungen verzweigt: Ein Zweig führt von unten durch die äußeren Bereiche 14 des diskusförmigen Körpers 12 nach oben. Der andere Zweig führt durch einen wendelförmigen Wärmetauscher 16 nach oben. Oberhalb der beiden Körper 12 und 16 vereinigen sich die beiden Leitungen bzw. Zweige zu einer Leitung, die an einem unteren Scheitelpunkt 17 der Kolbenpumpe 200 mittig wieder in die letztere eintritt.

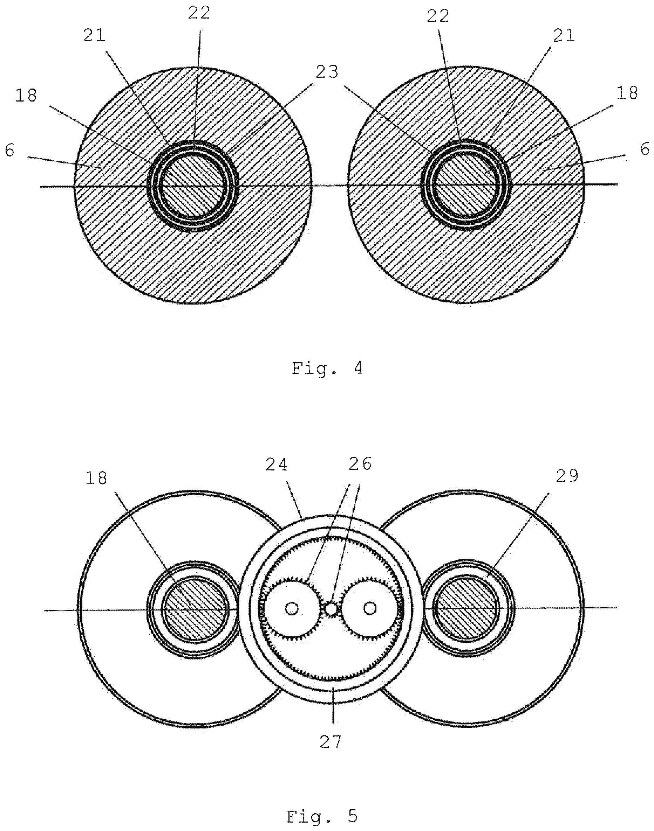

In Fig. 3 ist die Kolbenpumpe 200 ohne periphere Komponenten vergrößert dargestellt: Sie weist einen weichmagnetischen Kern 18 in Form eines aufgeschnittenen Torus auf, in den zwei parallele Teile, nämlich Zylinder-Teile 18A, 18B, eingefügt sind. Der Kern 18 ist so aufgebaut, dass Wirbelstromverluste minimal sind, z.B. in Form von parallelen isolierten Mumetalldrähten oder aus geschichtetem Trafoblech. Der Kern 18 ist außerdem so aufgebaut, dass der magnetische Fluss maximal und der magnetische Widerstand minimal wird, d.h. z.B. ohne Stoßstellen oder Luftspalte in Richtung des magnetischen Flusses. Die zylinderförmigen Teile 18A, 18B des Kerns 18 sind mit isoliertem Draht zur Bildung der Spulen 6 umwickelt. Zwischen dem Kern 18 und den Spulen 6 befindet sich jeweils ein ringförmiger Spalt 19. Die beiden Spulen 6 sind durch ein U-förmiges Rohr 20 verbunden, das den magnetischen Kern 18 konzentrisch umgibt. Der Luftraum 19 zwischen den U-förmig verbundenen Spulen 6 und dem Kern 18 ist durch eine Trennwand 21 in einen inneren, näher beim Kern 18 liegenden Spalt 22 und einen äußeren, näher beim Spulenkörper gelegenen Spalt 23 unterteilt; vgl. auch Fig. 4. Diese beiden Spalten 22 und 23 stellen zwei konzentrische kommunizierende Gefäße dar.

Zwischen den parallelen Teilen 18A, 18B des Kerns 18 oberhalb der Spulenkörper 6 befindet sich eine Umschaltvorrichtung 24 mit zwei Stellmotoren 25, die über je ein Planetengetriebe 26 je eine Scheibe 27 antreiben, vgl. auch Fig. 5; jede Scheibe 27 trägt im Zentrum eine kegelstumpfförmige Erhebung 28 und an der Außenseite ein Gewinde, das in einen Innengewinde des Gehäuses der Umschaltvorrichtung 24 gleitet.

Der Spalt 19 zwischen den Spulen 6 und dem Kern 18 (vgl. Fig. 3) wird mit der thermisch und elektrisch leitfähigen Flüssigkeit, z.B. Galinstan, gefüllt. Im Ruhezustand ist der Flüssigkeitsspiegel in beiden Schenkeln der kommunizierenden Röhren (entsprechend den Kernteilen 18A, 18B) gleich hoch.

Ein Ende der einen Spule 6 ist mit einem Ende der anderen Spule 6 so verbunden, dass die beiden Spulen 6 zusammen eine einzige Wicklung um den magnetischen Kern 18 bilden. Die magnetischen Flüsse der verbundenen Spulen 6 durch den Kern 18 verlaufen immer in dieselbe Richtung, entweder im Uhrzeigersinn oder gegen den Uhrzeigersinn. An den beiden Klemmen 4 (Fig. 1) wird eine Wechselspannung von 220 kV mit einer Frequenz von z.B. 50 Hertz angelegt. Diese Wechselspannung induziert ein Magnetfeld und einen zugehörigen magnetischen Fluss im Kern 18 der Kolbenpumpe 200, dessen Richtung sich mit derselben Frequenz (z.B. 50 mal pro Sekunde) umkehrt, abwechselnd im Uhrzeigersinn und gegen den Uhrzeigersinn.

Die Änderung des magnetischen Flusses im Kern 18 induziert ihrerseits eine ringförmig um den Kern 18 verlaufende und mit dem Kern 18 verkettete elektrische Wechselspannung in der im Spalt 19 befindlichen elektrisch leitfähigen Flüssigkeit. Der damit verbundene elektrische Strom $I_2$ in dieser Flüssigkeit induziert ein Magnetfeld, welches dem Magnetfeld im Kern 18 entgegengesetzt ist. Wenn das Magnetfeld im Kern 18 im Uhrzeigersinn verläuft, dann verläuft das durch den elektrischen Strom in der Flüssigkeit erzeugte Magnetfeld gegen den Uhrzeigersinn und umgekehrt. Auf jedes differentielle Volumenelement der Flüssigkeit wird eine gleich große Lorentzkraft ausgeübt, die gleich dem Produkt aus induziertem Strom $I_2$ und radialer Komponente der Induktion ist. Das verursacht im kommunizierenden Gefäß eine laminare Strömung ohne Wirbel, wobei sich die Flüssigkeit in einem Schenkel hebt, während sie sich im anderen Schenkel senkt. Dieses System wirkt somit als Kolbenpumpe oder Kolbenmaschine mit einem flüssigen Kolben.

Die bei der Verdichtung entstehende Wärme wird dadurch abgeführt bzw. beim Generatorbetrieb notwendige Wärme wird dadurch zugeführt, dass die Kolbenflüssigkeit während des Betriebs laufend umgewälzt und durch den Wärmetauscher 16 getrieben wird. Durch die laufende Umwälzung der Kolbenflüssigkeit in einem Kreislauf wird vermieden, dass immer die gleichen Moleküle der Flüssigkeit an der Grenze zwischen Kolben und Luft sind. Die Umwälzung der Kolbenflüssigkeit wird dadurch erreicht, dass der mit elektrisch leitfähiger Flüssigkeit gefüllte Spalt 19 durch die konzentrische Trennwand 21 in die zwei konzentrischen Spalten 22, 23 geteilt ist, vgl. außer Fig. 3 auch Fig. 4. Diese Spalten 22, 23 sind nur am oberen Ende des Hubraums 29 beider "Kolben" so verbunden, dass die Kolbenflüssigkeit vom inneren Spalt 22 in den äußeren Spalt 23 (und umgekehrt) übertreten kann. Das im Pumpbetrieb erhitzte (bzw. im Generatorbetrieb gekühlte) Kolbenvolumen wird in jeder Arbeitsperiode (also z.B. 50 mal pro Sekunde) durch die Umwälzpumpe 15 ausgetauscht. Die kleine Umwälzpumpe 15 funktioniert durch Induktion. Sie saugt die Kolbenflüssigkeit aus dem äußeren Spalt 23 nach unten ab, treibt sie kontinuierlich durch die Wärmetauscher 12, 16 durch und danach am unteren Scheitelpunkt 17 in den inneren Spalt 22 von unten wieder hinein. Die Umwälzpumpe 15 ist anders als die Hauptpumpe derart konstruiert, dass die Kolbenflüssigkeit immer nur in eine Richtung fließt und nicht hin und her. Dazu ist eine Phasendrehung von 0 oder 180 Grad zwischen Strom und Induktion erforderlich. Die resultierende Lorentzkraft wirkt dann immer in dieselbe Richtung. Bei Fließrichtung entlang der x-Achse eines kartesischen Koordinatensystems sind entlang der y-Achse Elektroden und entlang der z-Achse der Luftspalt eines magnetisierbaren Ringkerns anzuordnen.

Die komprimierte erwärmte Luft wird in der Druckrohrleitung 7 durch den Wärmespeicher 3 geführt, damit sie ihre Wärme abgeben kann. Umgekehrt kann die aus dem Druckluftspeicher 2 einströmende Luft Wärme aus dem Wärmespeicher 3 aufnehmen, bevor sie sich im Hubraum des dann als Generator funktionierenden Systems entspannt und abkühlt.

Um die Leistungsaufnahme im Pumpbetrieb (Ladevorgang) konstant zu halten, wird in an sich bekannter Weise das Volumen des Hubraums geregelt. Bei niedrigem Arbeitsdruck (z.B. 100 bar) ist der Kolbenflüssigkeitsspiegel niedrig, der Hubraum somit groß. Bei hohem Arbeitsdruck (z.B. 1000 bar) ist der Kolbenflüssigkeitsspiegel hoch, der Hubraum somit klein. Die Regelung des Hubraumvolumens erfolgt durch den als Volumenregler fungierenden Körper 12, der im Inneren durch die zwei Membranfedern 11 wie erwähnt in den mittleren (inneren) Bereich 13 und die zwei äußeren Bereich 14 getrennt ist (vgl. Fig. 2). Die Membranfedern 11 bauchen sich aus, wenn im mittleren Bereich 13 der Druck steigt. In diesem Bereich 13 befindet sich die hydraulische Flüssigkeit 10, deren Druck mit Hilfe des Druckwandlers 9 dem Arbeitsdruck proportional nachgeregelt wird. In den äußeren Bereichen 14 des diskusförmigen Körpers 12 befindet sich die Kolbenflüssigkeit, die aus den Bereichen 14 teilweise verdrängt wird, wenn sich die Membranfedern 11 ausbauchen und dadurch das Volumen im Bereich 14 verkleinern. Steigt der Arbeitsdruck, wird Kolbenflüssigkeit vom Raum 14 durch die Öffnung 17 in den Spalt 19 gedrängt und dadurch der Hubraum verkleinert. Die Federkennlinie und die Abmessungen der Membranfedern 11 sind vorzugsweise so gewählt, dass der Hubraum mit dem Arbeitsdruck so geregelt wird, dass die aufgenommene Leistung im Pumpbetrieb konstant ist.

Das System kann somit als Pumpe oder als Generator arbeiten. Im Pumpbetrieb wird elektrische Energie aufgewendet, um eine Verdichtungsarbeit im Hubraum oberhalb des Flüssigkeitsspiegels zu leisten. Dabei wird die im Hubraum eingeschlossene Luft soweit verdichtet, bis der Druck höher ist als der Druck im Druckluftspeicher 2. Dadurch wird ein Druckventil oberhalb der Kolbenflüssigkeit gegen die Kraft einer Feder geöffnet, und die verdichtete Luft strömt über die Druckrohrleitung 7 in den Druckluftspeicher 2. Im Pumpbetrieb reicht dabei allein der Druckunterschied aus, um das genannte Druckventil zu öffnen, wobei der Druck im Hubraum die Kraft der Feder überwindet, die das Druckventil nach dem Takt wieder schließt.

Während in einem "Zylinder" Luft verdichtet wird, wird im anderen Zylinder frische Luft von außen angesaugt, indem der entstehende Unterdruck im Hubraum des anderen Zylinders dort das Saugventil gegen die Kraft der Feder öffnet.

Im Generatorbetrieb wird an die Klemmen 4 eine Erregerspannung von außen angelegt. Diese Erregerspannung kann vom Netz, mit dem das gegenständliche Druckluftspeicherkraftwerk im Verbundbetrieb arbeitet, bereitgestellt werden. Bei einem Netzausfall kann die Erregerspannung durch ein autarkes konventionelles System (z.B. Dieselgenerator plus Trafo) erzeugt werden.

Hinsichtlich der allgemeinen Betriebsweise des Systems kann im Übrigen der Einfachheit halber auf die WO 2014/169312 A1 verwiesen werden.

Die Blindleistung bleibt in der Anlage. Sie pendelt zwischen Kapazität und Induktivität hin und her. Von außen wird nur dem Ersatzwiderstand Wirkleistung zugeführt bzw. von der Ersatzspannungsquelle Wirkleistung abgegeben.

Um die Wirbelstromverluste und die Ummagnetisierungsverluste zu minimieren, sind alle mechanisch festen Teile mit Ausnahme der Spulenwicklungen 6 und 15 des magnetischen Kerns 18 und der elektromagnetischen Ventilsteuerung aus elektrisch nicht leitendem Material (z.B. Keramik) ausgeführt. Dazu zählt auch die in der Zeichnung nicht dargestellte mechanische Halterung bzw. Aufhängung der Maschine. Die Aufhängung kann alternativ auch aus Holz und Ziegelmauerwerk ausgeführt sein.

Das beschriebene System ist eine Wärmekraftmaschine. Der thermodynamische Kreisprozess weist dabei eine polytrope Kompression, eine isobare Kompression, eine isochore Druckänderung und eine isobare Expansion auf.

Bei der Entladung des Druckluftspeichers 2 während des Generatorbetriebs nimmt der Arbeitsdruck im Druckluftspeicher 2 kontinuierlich ab. Um die Leistung im Generatorbetrieb konstant zu halten, wird der Arbeitsdruck - z.B. mit Hilfe eines in der Zeichnung nicht dargestellten Drosselventils - auf einen fixen Wert (z.B. 100 bar) heruntergedrosselt. Das Viereck, das beim Kreisprozess im Generatorbetrieb durchlaufen wird, hat stets dieselbe Form.

Durch die geeignete Wahl der Konstruktion und/oder der Betriebsparameter kann der Wärmeübergang zwischen dem Hubraum 29 und der Umgebung verändert werden, so dass der polytrope Prozess der Kompression/Expansion sich mehr oder weniger einem isothermen Prozess annähert und dadurch der Wirkungsgrad des Systems mehr oder weniger verbessert werden kann. Ein höherer Wirkungsgrad kann u.a. mit einer geringeren Leistung/längeren Ladezyklen erkauft werden oder umgekehrt.

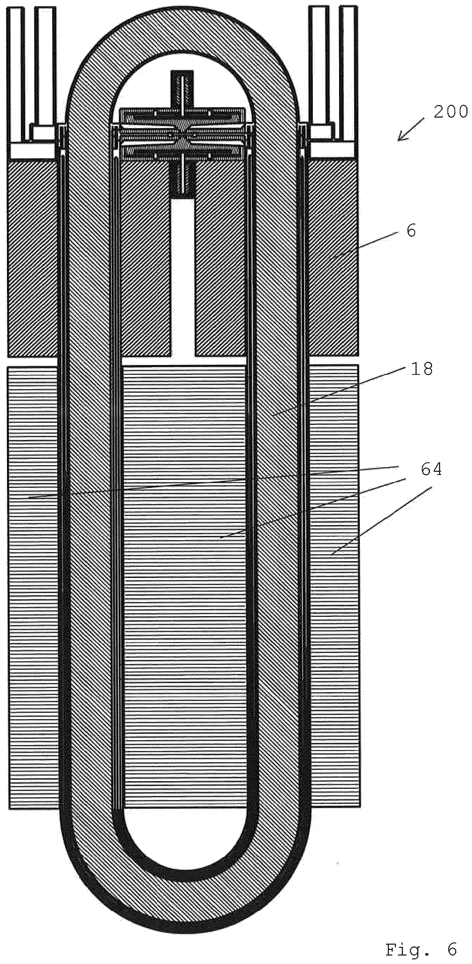

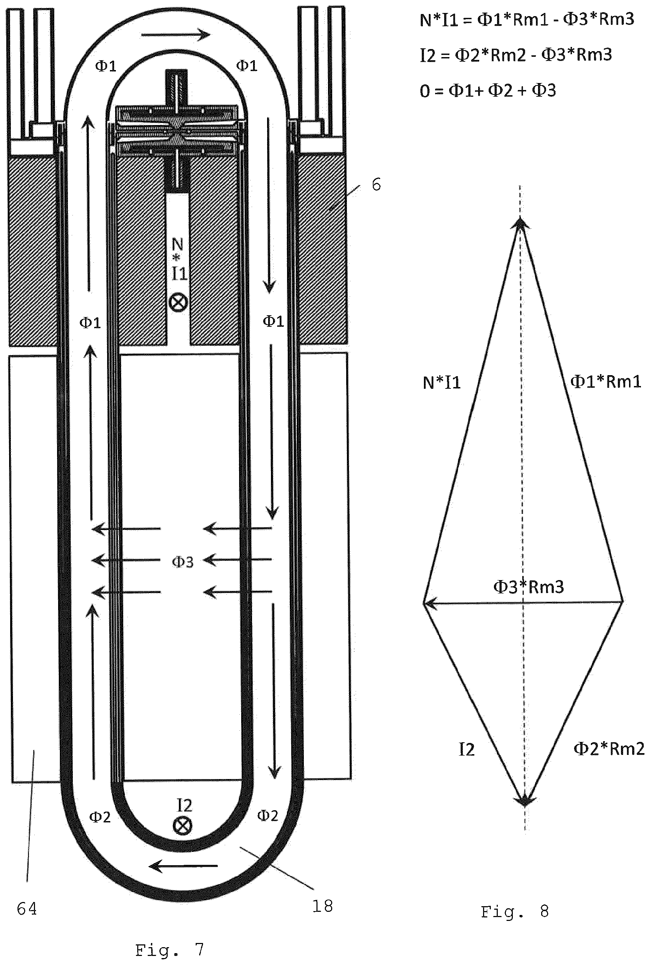

Fig. 6 zeigt nun eine verbesserte Variante der Induktionspumpe 200 mit verlängerten geraden Abschnitten. Unterhalb der elektrischen Spule 6 befindet sich eine Brücke 64 zwischen den beiden geraden Abschnitten, die wie der Kern 18 aus einem weichmagnetischen Material (z.B. geschichtetes Trafoblech) besteht. Wie die Spulen 6 lässt auch die Brücke 64 einen Spalt zum Kern 18 frei, durch den die Kolbenflüssigkeit fließen kann. Die Brücke 64 erzwingt einen magnetischen Streufluss, der den Kern 18 im geraden Abschnitt in radialer Richtung verlässt, durch die Brücke 64 geht und im gegenüberliegenden geraden Abschnitt des Kerns 18 in radialer Richtung eindringt. Nur diese radiale Komponente bewirkt mit dem (tangential um den Kern 18 herum verlaufenden) Sekundärstrom $I_2$ (vgl. Fig. 8) eine Lorentzkraft, die axial, d.h. parallel zur Achse des Magnetkerns 18, wirkt. Fig. 7 und 8 zeigt die Richtung der nunmehr drei magnetischen Flüsse. Der Fluss durch die Primärwicklung Φ1 teilt sich auf in den Fluss Φ2 durch den Kern 18 und den Streufluss Φ3 durch die Brücke 64. In Fig. 8 ist das zugehörige Zeigerdiagramm der elektrischen Ströme und der magnetischen Flüsse abgebildet, wobei $I_1$ für den Primärstrom steht und N für die Wicklungszahl der Spule 6. Die erste und vierte Maxwellgleichung können in dieser Anordnung nur dann erfüllt werden, wenn das Zeigerdiagramm qualitativ die dargestellte Form hat. Es gibt eine Komponente des Streuflusses Φ3, die im rechten Winkel zum Zeiger des Sekundärstroms $I_2$ steht, d.h. die zu $I_2$ eine Phasenverschiebung von 90 Grad aufweist. Das Produkt der beiden, die Lorentzkraft, wechselt daher in jeder Viertelperiode das Vorzeichen, ist also in jeder Periode zweimal positiv und zweimal negativ. Eine sinusförmige Spannung mit der Frequenz f an der Primärseite bewirkt daher eine periodische Lorentzkraft auf den Kolben mit der Frequenz 2f. Die Brücke 64 bewirkt somit zweierlei:

    1. eine Erhöhung der radialen Induktion und
    2. die Herstellung einer 90 Grad-Phasenverschiebung zwischen (einer Komponente) der Induktion und dem Sekundärstrom, was eine Pumpbewegung bewirkt.

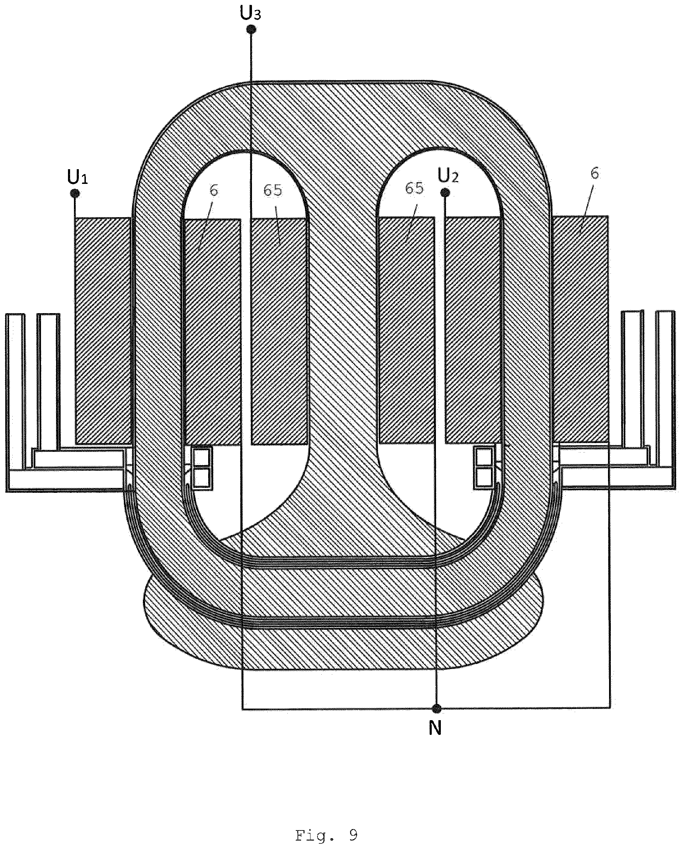

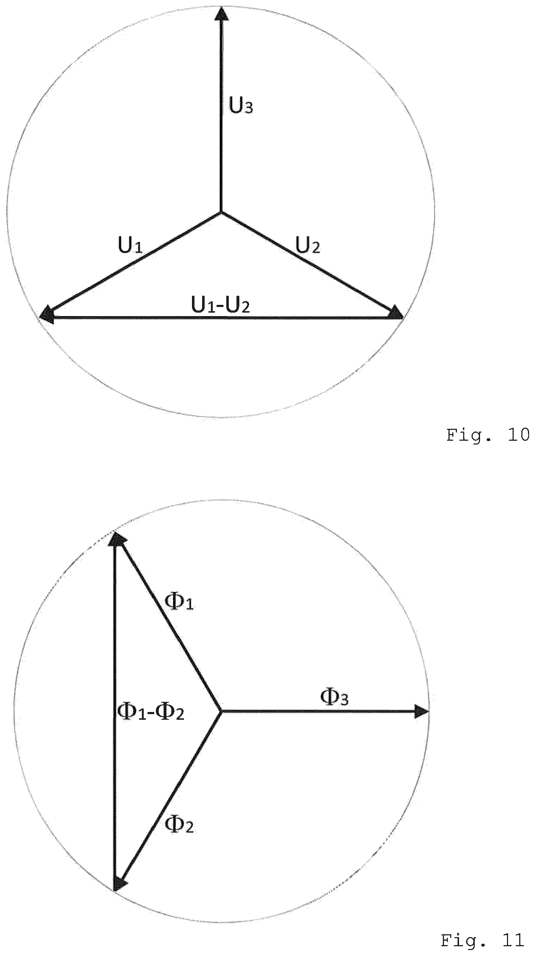

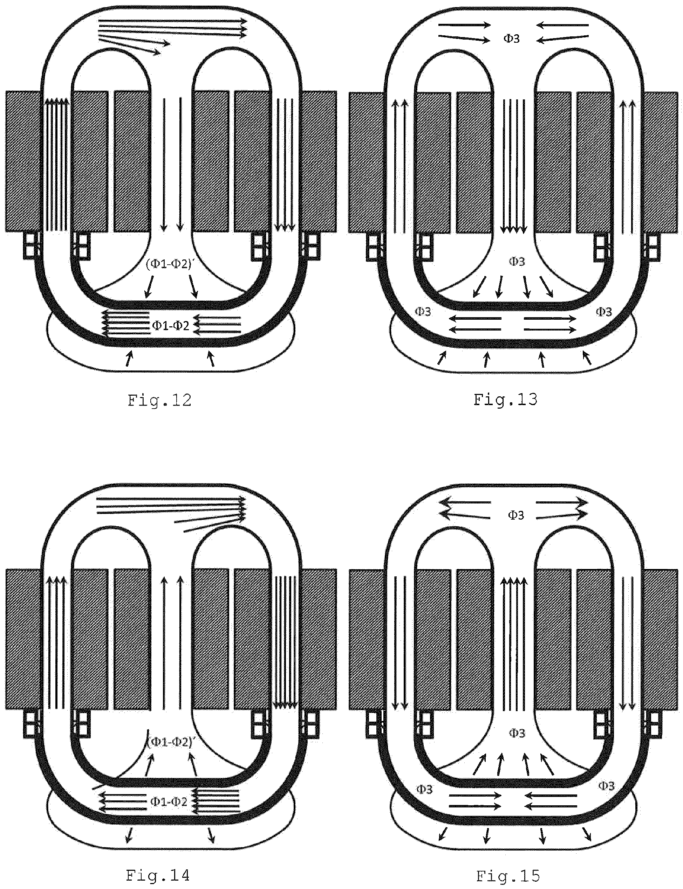

Fig. 9 stellt eine Drehstromvariante dar. Hier ist die Brücke 64 vertikal angeordnet und mit einer Hilfswicklung 65 umwickelt, um den magnetischen Fluss Φ3 durch die Brücke 64 zu verstärken. Die drei Phasen des Drehstroms sind in Fig. 9 und 10 mit U1, U2 und U3 bezeichnet, die resultierenden magnetischen Flüsse in Fig. 11 sowie 12 bis 15 mit Φ1, Φ2 und Φ3. Das Zeigerdiagramm der elektrischen Spannungen ist in Fig. 10 dargestellt. Das Zeigerdiagramm der magnetischen Flüsse ist in Fig. 11 dargestellt. Die Hauptwicklung 6 besteht aus zwei gleichen Spulenkörpern, die gleichsinnig gewickelt sind und gemeinsam eine Induktivität bilden, an der die Spannung U1-U2 abfällt. In der Mitte zwischen den beiden Spulenkörpern 6 ist die Hilfswicklung 65 angebunden. An diesem Punkt befindet sich der Nullpunkt N der drei Phasen. Am freien Ende der Hilfswicklung 65 ist die dritte Phase U3 angeschlossen. Die Spannung U1-U2 induziert einen magnetischen Fluss Φ1-Φ2, wie in Fig. 11 und 12 dargestellt, wobei ein kleiner Teil dieses Flusses (Φ1-Φ2) durch die Brücke 64 fließt und der größere Teil durch den Außenring, wo er den Strom $I_2$ induziert. Die Spannung U3 induziert einen magnetischen Fluss Φ3, wie in Fig. 11 und 13 gezeigt. Die Wirkungsweise, die in Fig. 9 dargestellt ist, wird durch die Einführung der Hilfswicklung 65 und den Einsatz von Drehstrom noch verstärkt. Die Fig. 12 bis 19 zeigen den Feldlinienverlauf der magnetischen Flüsse für jede Viertelperiode. Die 90 Grad-Phasendrehung zwischen dem Hauptfluss (Φ1-Φ2) und dem Nebenfluss ((Φ1-Φ2) + Φ3) bewirkt, dass sich das Vorzeichen der Lorentzkraft auf den Kolben nach jeder Viertelperiode umkehrt. Eine sinusförmige Spannung mit der Frequenz f an der Primärseite bewirkt auch in dieser Bauform eine periodische Lorentzkraft auf den Kolben mit der Frequenz 2f.

Eine weitere Verstärkung der Wirkung ist möglich, wenn die Kolbenflüssigkeit magnetisierbar gemacht wird, d.h. eine relative Permeabilität größer als 1 erzeugt wird, z.B. durch Beimengung von magnetisierbaren Nanopartikeln in der Kolbenflüssigkeit ("Ferrofluid").

Eine weitere Verstärkung der Wirkung wird durch die Einführung von mechanischer Blindleistung erzielt. Die kinetische Energie des Kolbens ist $W_{kin} = mv^2/2$. Die Änderung der kinetischen Energie mit der Zeit ist gegeben durch $dW_{kin}/dt = mv \cdot dv/dt = v \cdot F$. Die Änderung der kinetischen Energie des Kolbens mit der Zeit ist das Produkt aus der Kraft, die auf den Kolben wirkt und der Geschwindigkeit des Kolbens. Die von außen aufgenommene elektrische Energie ist größer, wenn der Kolben nicht bei jedem Hub seine gesamte kinetische Energie in gespeicherte Energie umwandelt, sondern wenn ein Teil seiner kinetischen Energie in potentielle Energie umgewandelt wird, die dem Kolben einen Impuls in die Gegenrichtung gibt und ihn auf eine bestimmte Geschwindigkeit beschleunigt.

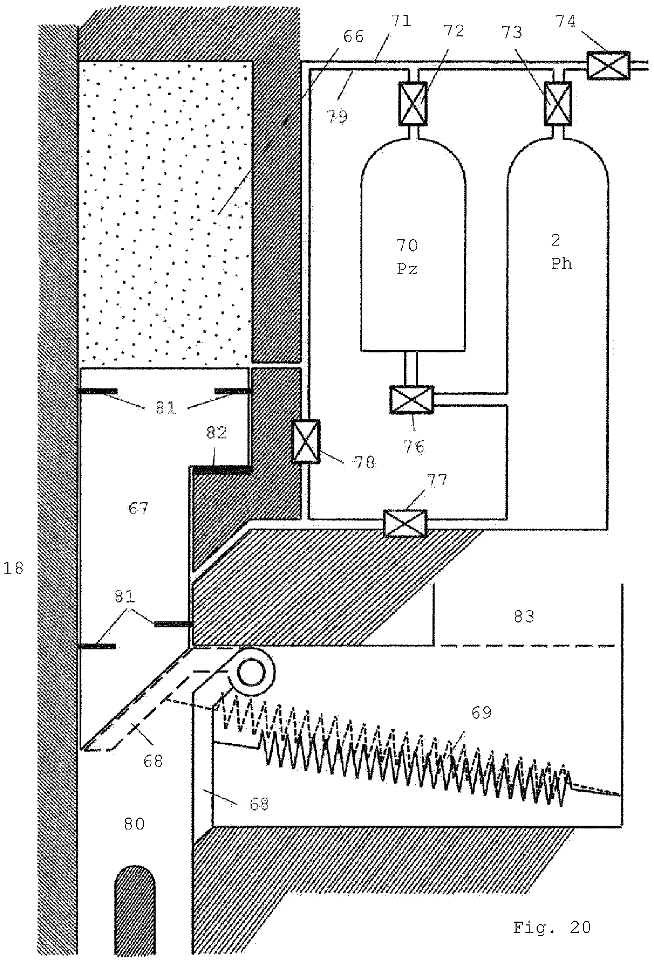

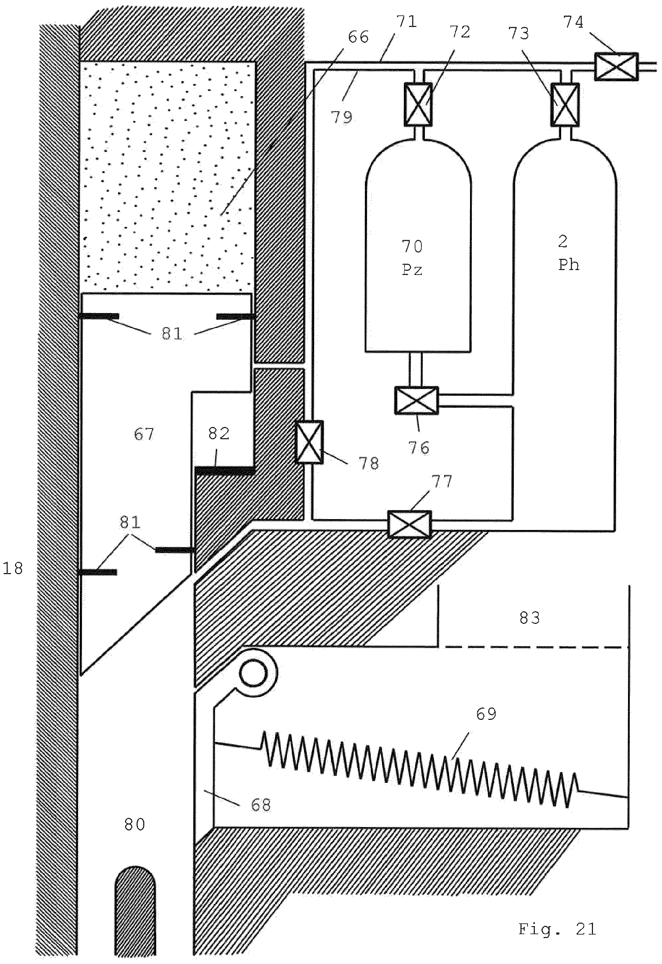

Die potentielle Energie kann in einer Feder gespeichert werden, vorteilhafterweise in einer Druckluftfeder 66, wie in Fig. 20 und 21 gezeigt.

Eine mögliche Konstruktion inklusive eines Druckventils 67 und einer Saugklappe 68 ist in den Fig. 20 und 21 dargestellt. Die Saugklappe 68 wird mit Hilfe einer Feder 69 geschlossen. Die Kraft und der Weg der Druckluftfeder 66 kann mit dem Druckniveau Pz in einem Zwischenspeicher 70 eingestellt werden, der parallel zum Hauptspeicher 2 an eine Leitung 71 angeschlossen ist, wobei Absperrventile 72, 73 zwischengeschaltet sind. Das Druckniveau des Hauptspeichers 2 ist mit Ph bezeichnet.

Ein weiteres Ventil, ein Hauptventil, ist in Fig. 20 und 21 bei 74 gezeigt.

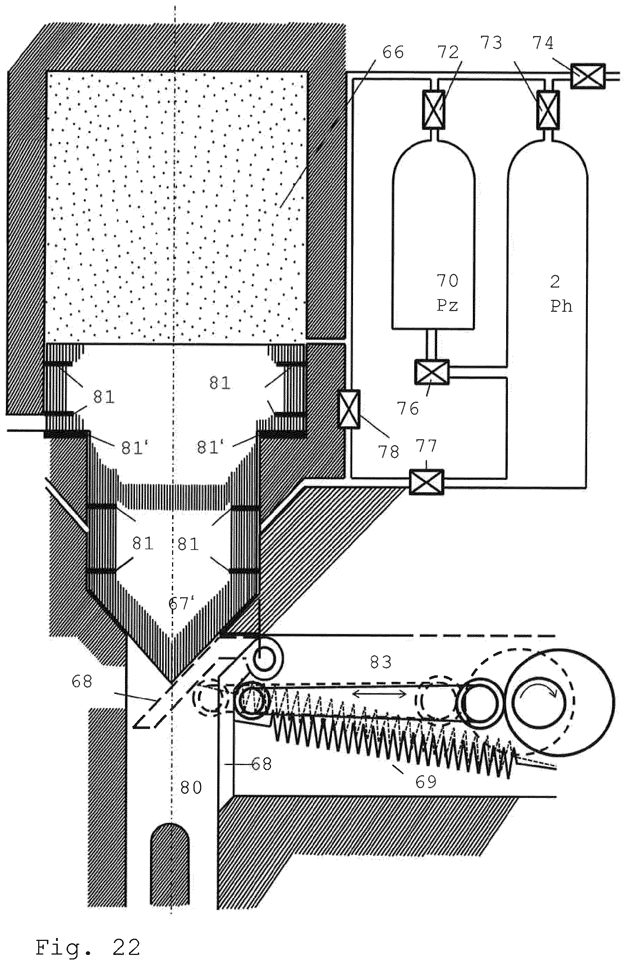

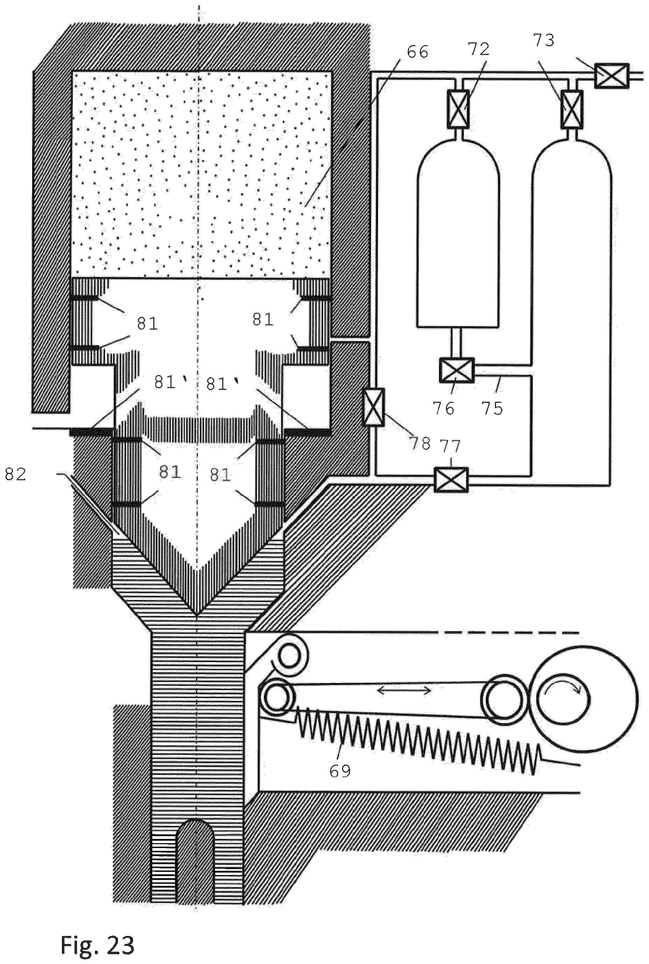

In einer Verbindung 75 zwischen dem Hauptspeicher 2 und dem Zwischenspeicher 70 ist ein Regelventil 76 vorgesehen, vgl. auch Fig. 22 und 23 und weitere Absperrventile 77 bzw. 78 sind in den Leitungen von dem Speicher 2 bzw. von der Zuleitung 79 zum Hubraum 80 (vgl. Fig. 21) angeordnet. Das Druckventil bzw. der Ventilkörper 67, der gemäß den Darstellungen in Fig. 20 und 21 auf- und abbewegbar ist, ist überdies mit Dichtungen 81 versehen, wobei eine weitere Dichtung 81' an einer stufenförmigen Auflagefläche am Kolbengehäuse vorgesehen ist. Die Saugklappe 68, die in Fig. 20 im geöffneten Zustand mit strichlierten Linien gezeigt ist, stellt in diesem geöffneten Zustand eine Verbindung des Hubraums 80 mit dem Umgebungsdruck 83 her. In dieser geöffneten Stellung der Saugklappe 68 gemäß Fig. 20 liegt die Saugklappe 68 an der schrägen Unterseite des Ventilkörpers 67 an.

In der angehobenen Stellung gemäß Fig. 23 gibt der Ventilkörper (67' in Fig. 22) einen Ringkanal 82 (s. Fig. 23) frei, der über die Ventile 77, 78 ansteuerbar ist.

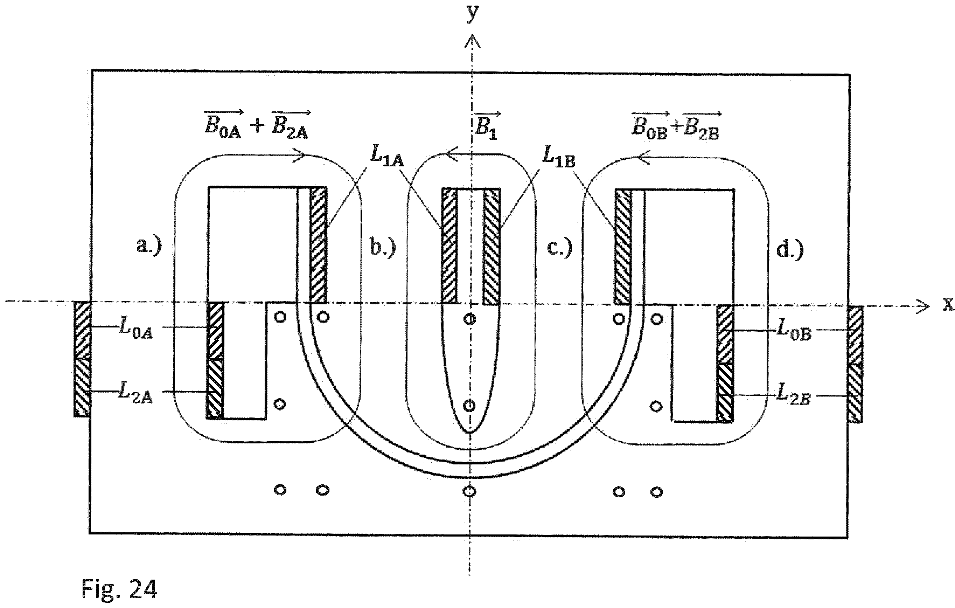

In Fig. 24 ist zur Veranschaulichung einer Abwandlung einer Trafoblech-Anordnung für die Brücke des vorliegenden Druckluftspeicherkraftwerks eine Ausführungsform des Trafoblechs 100 für einen Transformatorkern mit vier Schenkeln a.) bis d.) gezeigt, wobei die beiden inneren Schenkel b.) und c.) U-förmig miteinander verbunden sind, ebenso wie die beiden äußeren Schenkel a.) und d.). Die Verbindung zwischen den Schenkeln b.) und c.) ist an der Unterseite durch einen halbkreisförmigen Spalt 101 begrenzt an der Oberseite hingegen so "begrenzt", dass sich der Eisenquerschnitt nach unten verjüngt. Ebenso ist die Verbindung zwischen den Schenkeln a.) und d.) an der Oberseite begrenzt. Durch das Stapeln gleichförmiger Bleche entlang der z-Achse (senkrecht zur Zeichnungsebene von Fig. 22) entsteht ein schmaler Hohlraum (Spalt) in U- Form ähnlich einem kommunizierenden Gefäß. An den Aussenseiten der Trafobleche 100 sowie zwischen ihnen werden in regelmässigen Abständen dickere Stahlplatten (eine Stahlplatte ist in Fig. 24 bei 102 schematisch gezeigt) eingefügt, um die Festigkeit zu erhöhen. Die Stahlplatten können dieselbe Form haben wie die Trafobleche 100. Dann entsteht ein durchgehender Spalt. Die Stahlplatten können zur Erhöhung der mechanischen Festigkeit im Bereich der inneren Schenkel b.) und c.) durch den Spalt durchgehend sein. In diesem Fall entstehen mehrere parallele Spalten. Damit die vom Trafoblech ausgehenden magnetischen Feldlinien radial durch den Spalt gehen und nicht durch die Stahlplatten kurzgeschlossen werden, darf der Stahl in diesem Fall nicht magnetisierbar sein. Elektrisch isolierende Platten dürfen nicht verwendet werden, da im Spalt bzw. durch alle Spalten in z-Richtung (senkrecht zur Zeichenebene) elektrischer Strom fließen muss. Die Platten und die Bleche können durch elektrisch vom Kern isolierte Gewindestangen aus Stahl mit Muttern und elektrisch isolierten Beilagscheiben zusammengehalten werden.

Der bzw. jeder Spalt 101 wird mit einer Flüssigkeit befüllt, die nicht magnetisierbar sein darf, aber elektrisch hinreichend gut leitfähig sein soll. Was als "hinreichend" betrachtet werden kann, hängt von wirtschaftlichen Überlegungen ab. Je besser die elektrische Leitfähigkeit ist, desto geringer werden die ohmschen Verluste sein. Außerdem muss die Flüssigkeit möglichst gut thermisch leitfähig sein und eine möglichst hohe Wärmekapazität besitzen, um die bei der Kompression der Luft entstehende Wärme schnell abführen bzw. die bei der Expansion benötigte Wärme schnell zuführen zu können. Die Flüssigkeit kann z.B. eine Legierung aus Gallium, Indium und Zinn (Galinstan ™) sein, die bei Temperaturen oberhalb von minus 10 Grad Celsius flüssig und anders als Quecksilber ungiftig ist, und die einen spezifischen elektrischen Widerstand aufweist, der etwa acht mal größer ist als der spezifische elektrische Widerstand von Kupfer.

Diese Flüssigkeit kann z.B. auch eine Legierung aus Natrium und Kalium sein, die bei einem Kaliumgehalt zwischen 40 % und 90 % bei Raumtemperatur flüssig ist. Das Eutektikum liegt bei einer Konzentration von 22 % Natrium und 78 % Kalium, hat einen Schmelzpunkt von -11 °C und einen Siedepunkt von 785 °C.

Die Flüssigkeit kann ferner auch eine Mischung von kleinen Metallteilchen (z.B. Nanopartikel) mit einer geeigneten Trägerflüssigkeit (Wasser, Öl, Aceton, etc.) sein, z.B. eine Dispersion oder eine molekulare Dispersion.

Aus Fig. 24 ist ferner bei 103 schematisch eine von Windungen aus verbundenen Kupferquadern ersichtlich. Weiters sind Kühlkreisläufe symbolisch bei 0 veranschaulicht.

An der Vorderseite, der Innenseite und der Rückseite der Schenkel b.) und c.) werden im Bereich $y < 0$ Kupferplatten angebracht. Sie bilden gemeinsam mit der Flüssigkeit im Spalt, welche den Kolben der Maschine darstellt, einen elektrischen Kurzschluss. Die Schenkel b.) und c.) bilden einen Transformator mit einer primärseitigen Wicklung $L_1$ (siehe Fig. 23) mit einem sekundärseitigen Kurzschluss bzw. einer Sekundärwicklung mit der Windungszahl $N = 1$. Eine Wechselspannung, die an der Primärseite $L_1$ angelegt wird, transformiert sich auf die Sekundärseite im entsprechenden Verhältnis. Die Sekundärspannung fällt zum Großteil als elektromotorische Kraft EMK im bewegten Kolben und nur zu einem geringen Teil am Ersatzwiderstand der ohmschen Verluste ab.

Im Leerlauf der Maschine findet eine freie Schwingung sowohl eines mechanischen als auch eines elektromagnetischen schwingungsfähigen Systems statt. Die beiden Systeme sind so miteinander verkoppelt, dass die Ruhinduktion des elektrischen Schwingkreises und die Bewegungsinduktion des Pendels eine möglichst exakte Balance bilden und sich im Spalt gegenseitig kompensieren. In anderen Worten: Die Lorentzkraft, die den bewegten Kolben in seiner Bewegung hindern will, wird durch die Form der von außen angelegten Spannung möglichst exakt zu Null egalisiert. Der Kolben spürt daher (fast) keine Lorentzkraft und kann frei schwingen, so als ob es kein Magnetfeld im Spalt gäbe.

Wenn das System als Pumpe oder als Generator arbeitet, ist diese Balance gestört, und es fließt je nach Betriebszustand Energie aus dem elektrischen Netz in den Druckluftspeicher oder umgekehrt aus diesem heraus. Im Pumpbetrieb verlangsamt sich die Bewegung des Kolbens durch die zu leistende Verdichtungsarbeit. Die geringere Geschwindigkeit des Kolbens bewirkt eine geringere elektromotorische Kraft durch Bewegungsinduktion. Die von aussen angelegte Primärspannung und die durch Ruhinduktion erzeugte Sekundärspannung im Spalt überwiegen die EMK der Bewegungsinduktion. Folglich fließt so lange ein Strom bzw. wirkt so lange eine Lorentzkraft, die den Kolben beschleunigt, bis das Gleichgewicht zwischen Ruhinduktion und Bewegungsinduktion wieder hergestellt ist. Im Generatorbetrieb erhöht sich die Geschwindigkeit des Kolbens, weil er durch die expandierende Druckluft beschleunigt wird. Die EMK der Bewegungsinduktion überwiegt die von außen angelegte Spannung. Der Strom fließt in die entgegengesetzte Richtung und transformiert sich an die äußeren Klemmen, so dass dort eine Spannungsquelle vorliegt, die an einem äußeren elektrischen Lastwiderstand Arbeit leisten kann. Die durch den Stromfluß bewirkte Lorentzkraft bremst den Kolben so lange, bis wieder ein Gleichgewicht zwischen Ruhinduktion und Bewegungsinduktion hergestellt ist.

Die z-Achse ($x = 0, y = 0$) ist die Drehachse des Pendels. Der halbkreisförmige Spalt 101, s. Fig. 22, kann an seinen Enden durch gerade Abschnitte h im Bereich $y > 0$ zu einer U-Form verlängert werden. Der obere Umkehrpunkt des flüssigen Kolbens befindet sich dann auf der Höhe $y = h$, s. auch die schematische Darstellung in Fig. 22. Der untere Umkehrpunkt des Kolbens befindet sich dann auf der Höhe $y = 0$. Die Weglänge dazwischen ist die Höhe $h$ des Hubraums. Er ist im Ruhezustand der Maschine nicht bis zum oberen Rand $y = h$ mit Flüssigkeit gefüllt, sondern nur bis zur Höhe $y = \dfrac{h}{2}$. Oberhalb des Flüssigkeitsspiegels ist der Spalt mit Luft gefüllt. Am oberen Ende des Hubraums befindet sich ein Druckventil 67', das seitlich durch ein Saugventil 68 ergänzt wird (vgl. auch Fig. 21). Der obere Umkehrpunkt des Kolbens kann natürlich auch auf der Höhe $y = 0$ liegen. Der Hubraum ist dann ein Teil des kreisbogenförmigen Spalts 101 (Fig. 24). In Richtung der z-Achse hat der Luftspalt die Ausdehnung d. Er reicht auf der z-Achse von $-\dfrac{d}{2}$ bis $+\dfrac{d}{2}$. Die Ausdehnung $d$ entspricht der Dicke des Blechpakets samt darin eingelegten Stahlplatten, jedoch ohne die den Spalt abschließenden Kupferplatten vorne und hinten und ohne die außerhalb der Kupferplatten abschließenden Stahlplatten.

Die gesamte bei der Kompression entstehende Wärme soll in der Anlage gespeichert und bei der Expansion möglichst vollständig zurückgeführt werden. Die Kolbenflüssigkeit befindet sich daher zweckmässigerweise in einem geschlossenen Kreislauf durch die Maschine und einem außerhalb der Maschine befindlichen Wärmetauscher (nicht dargestellt). Der Wärmetauscher besteht aus einer wendelförmigen Leitung, in deren Innerem die Kolbenflüssigkeit fließt. An der Außenseite der Leitung befindet sich das Wärmespeichermedium, z.B. destilliertes Wasser, in das die gesamte Anlage samt Druckluftspeicher vollständig eingetaucht ist. Das Wasserbecken ist nach außen hin thermisch isoliert. Zur Umwälzung der Kolbenflüssigkeit ist z.B. eine kleine induktive Hilfspumpe (nicht dargestellt) vorgesehen. Die laufende Umwälzung der Kolbenflüssigkeit samt Wärmetausch trägt dazu bei, aus einem eher adiabaten Prozess einen eher isothermen Prozess zu machen, um einen hohen Wirkungsgrad zu erreichen.

Durch eine geeignete Geometrie des Spalts 101 wird der Kreislauf der Kolbenflüssigkeit ermöglicht. Insbesondere soll die Flüssigkeit an der Grenze zur komprimierten bzw. expandierenden Luft möglichst rasch umgewälzt und durch frische Flüssigkeit ersetzt werden.

Eine geeignete Geometrie kann durch die Teilung des Spalts in zwei Spalte mittels einer dazwischen liegenden festen Grenzschicht hergestellt werden, wie weiter oben beschrieben. Der Transport der Kolbenflüssigkeit durch die Maschine erfolgt dann entlang von Linien parallel zur xy-Ebene in den beiden Teilspalten in entgegengesetzten Richungen. Alternativ kann die Flüssigkeit in der hier vorgestellten Anordnung auch in z-Richtung durch den Spalt transportiert werden, wie im Folgenden beschrieben. Auch eine Kombination beider Verfahren ist möglich. Die vier Punkte mit den Koordinaten

$$x = \pm \frac{x_1 + x_2}{2},$$

$$y = 0,$$

$$z = \pm \frac{d}{2},$$

befinden sich an den äußeren Rändern des Spalts am Niveau des unteren Umkehrpunkts. An diesen vier Punkten münden Rohrleitungen in den (hier durchgehenden) Spalt ein, die durch Bohrungen in den abgrenzenden Kupfer- und Stahlplatten geführt werden. Immer wenn sich ein Kolben am unteren Umkehrpunkt befindet, dann wird die oberste Schicht der Kolbenflüssigkeit durch eine der beiden Rohrleitungen abgesaugt, während frische Kolbenflüssigkeit über die andere der beiden Rohrleitungen in den Spalt einströmt. Die auf der einen Seite abgesaugte Kolbenflüssigkeit wird durch einen Wärmetauscher gepresst und dann auf der anderen Seite wieder in den Spalt hineingepumpt.

Ausgehend von einer leer laufenden Maschine mit frei schwingendem Kolben wie oben beschrieben kann kurzfristig in einen Pumpbetrieb oder in einen Generatorbetrieb übergegangen werden. Der Betriebszustand hängt nur von der Phasenlage der Öffnung des Saugventils 68 ab. Je nachdem, wann dieses Ventil 68 während eines vollen Zyklus geöffnet wird, wird entweder frische Luft angesaugt (Pumpbetrieb) oder entspannte Luft an die Umgebung abgegeben (Generatorbetrieb). Die Schaltung soll so schnell wie möglich sein, sodass diese Maschine als Primärregelreserve eingesetzt werden kann. Um dies zu ermöglichen, kann im Leerlauf der Maschine ein Schwungrad von einem Hilfsmotor mit festem Zeit-Drehwinkel-Verhältnis (Synchronmotor oder Schrittmotor) angetrieben werden. Mit diesem rotierenden Schwungrad kann eine Kupplungsscheibe fest verbunden sein. Im Bedarfsfall kann eine Kurbelwelle, die das Saugventil öffnet und schließt, sehr schnell mit dieser rotierenden Kupplungsscheibe gekuppelt werden. Damit kann die entscheidende Phasenlage der Saugventilsteuerung mit hinreichend kleiner Verzögerung definiert eingestellt werden.

Es sind zwei Typen von Bauformen möglich, die sich durch die Art der Induktion im Spalt unterscheiden. Typ 1 weist ein Wechselfeld im Spalt auf, während Typ 2 ein Gleichfeld zur Erregung verwendet. Typ 2 kann weiter differenziert werden in einen Typ 2A, der mit einem Elektromagnet arbeitet, und einen Typ 2B, der einen Permanentmagneten besitzt.

Fig. 24 zeigt den Aufbau von Typ 1 samt Wicklungen und stilisierten Feldlinien:

Zwei Spulen $L_{1A}$ und $L_{1B}$ sind gemäß Fig. 24 gleichsinnig gewickelt und so miteinander verbunden, dass sich ihre Induktionen $\overrightarrow{B_{1A}}$ und $\overrightarrow{B_{1B}}$ addieren zu einer Gesamtinduktion $\overrightarrow{B_1}$ der verbundenen Spule $L_1$ durch die Schenkel b.) und c.). Die links und rechts außen auf den Schenkeln, bei a.) und d.), befindlichen Wicklungen $L_{0A}$ und $L_{0B}$ sind baugleich hinsichtlich Windungszahl $N_0$ und Drahtstärke. Wicklungssinn und Stromrichtung sind so gewählt, daß die von den Spulen $L_{0A}$ und $L_{0B}$ erzeugte Induktion $B_{0A}$ und $B_{0B}$ im Spalt stets in dieselbe Richtung (z.B. nach unten) zeigt. Dazu müssen die Feldlinien in der einen Hälfte (Schenkel bei a.) und b.)) im Uhrzeigersinn und in der anderen Hälfte (Schenkel bei c.) und d.)) gegen den Uhrzeigersinn verlaufen. $B_0$ ist ein reines Gleichfeld ohne Wechselanteil. Analog dazu erzeugen die Spulen $L_{2A}$ und $L_{2B}$ gemeinsam eine Komponente $\overrightarrow{B_2}$ der Induktion im Spalt. Diese ist eine sinusförmige Wechselgröße mit der doppelten Netzfrequenz $2f$. Die Induktion $\overrightarrow{B_S}$ im Spalt steht allgemein senkrecht auf die Grenzflächen des Spalts (wegen des Brechungsgesetzes der magnetischen Feldlinien). Sie besteht aus einem Gleichanteil und einem sinusförmigen Wechselanteil.

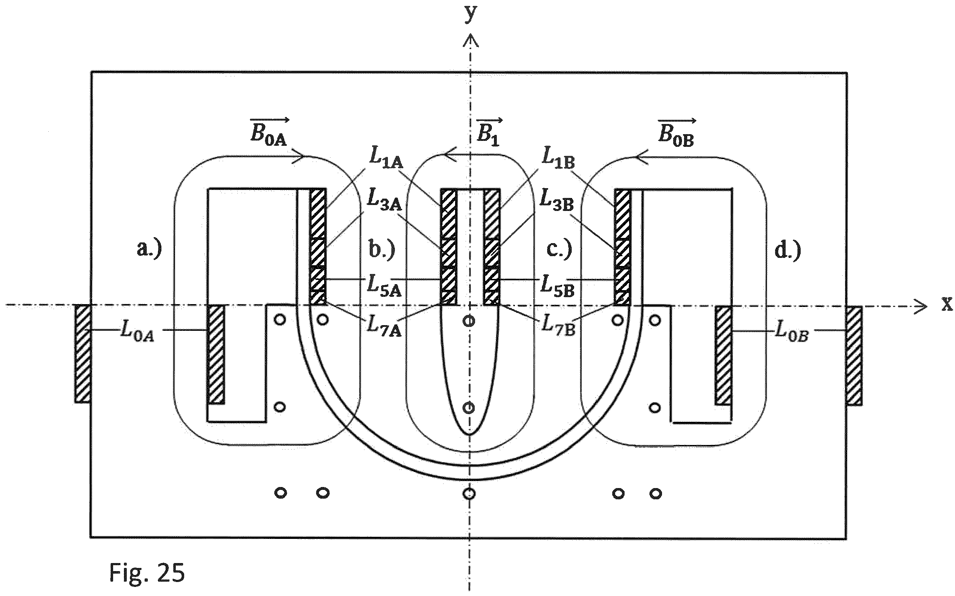

Beim Typ 2, vgl. Fig. 25, ist die Induktion im Spalt ein reines Gleichfeld $\overrightarrow{B_0}$. Daher entfallen die Spulen $\overrightarrow{L_{2A}}$ und $\overrightarrow{L_{2B}}$ sowie der Feldanteil $\overrightarrow{B_2}$. Dafür gibt es bei diesem Typ nicht nur eine Primärwicklung im Trafo-artigen mittleren Teil, sondern mehrere.

In Fig.25 sind vier parallele Primärwicklungen dargestellt, die aus je zwei gleichsinnig gewickelten, zu einer Spule verbundenen Wicklungspaaren aufgebaut sind.

Mit diesen Spulen werden die Grundschwingung und die ersten Oberschwingungen der periodischen Spannung erzeugt, die den zeitlichen Verlauf der Geschwindigkeit des Pendels und der von ihm erzeugten Bewegungsinduktion möglichst gut annähern. Die Wechselspannungen $\vec{U}_1$, $\vec{U}_3$, $\vec{U}_5$, $\vec{U}_7$,... , die an diese Spulen angelegt werden, haben daher unterschiedliche Frequenzen

$$\vec{U}_1 = \hat{U}_1 \sin \omega t$$

$$\vec{U}_3 = \hat{U}_3 \sin 3\omega t$$

$$\vec{U}_5 = \hat{U}_5 sin5\omega t$$

$$\vec{U}_7 = \hat{U}_7 sin7\omega t$$

Die Ampituden $\hat{U}_1$, $\hat{U}_3$, $\hat{U}_5$, $\hat{U}_7$,... entsprechen den Fourierkoeffizienten des zu bildenden Spannungsverlaufs. Die Wechselspannung $\vec{U}_1$ kann direkt aus dem Netz entnommen werden. Die Wechselspannungen $\vec{U}_3$, $\vec{U}_5$, $\vec{U}_7$,... werden getrennt voneinander aus der Eingangsspannung erzeugt. Dies erfolgt z.B. durch gezielte Übersteuerung je eines Koppeltrafos in den nichtlinearen Bereich mit anschließender Filterung der gewünschten Frequenz durch einen Parallelschwingkreis. Die einzelnen Koppeltrafos werden so dimensioniert, dass die Spannung am Ausgang den maximalen Anteil der gewünschten Frequenz enthält.

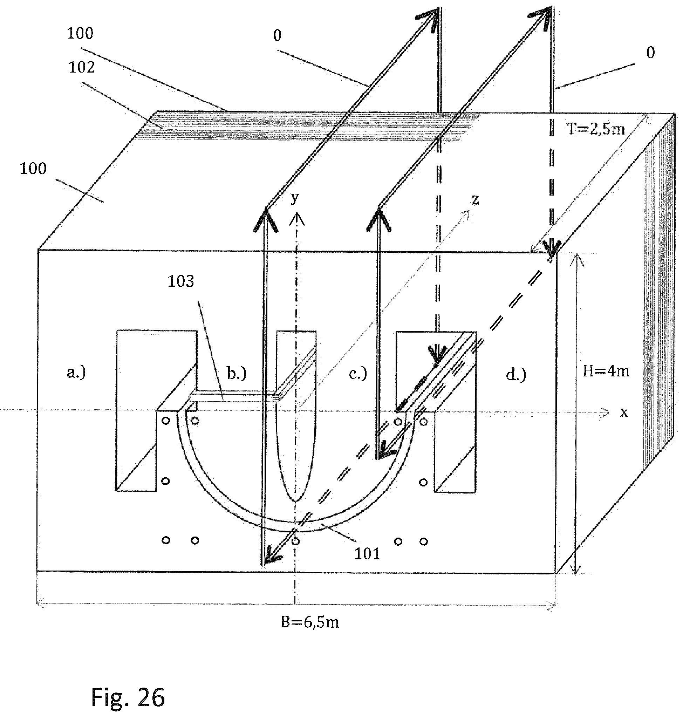

In Fig. 26 ist schematisch ein Kern aus geschichtetem Trafoblech 100 mit einer eingelegten Stahlplatte 102 gezeigt, wobei weiters schematisch eine Windung 103 von n Windungen aus verbundenen Kupferquadern veranschaulicht ist. Weiters ist symbolisch ein Kühlkreislauf O gezeigt; die Kolbenflüssigkeit wird im Spalt entlang der z-Achse bewegt.

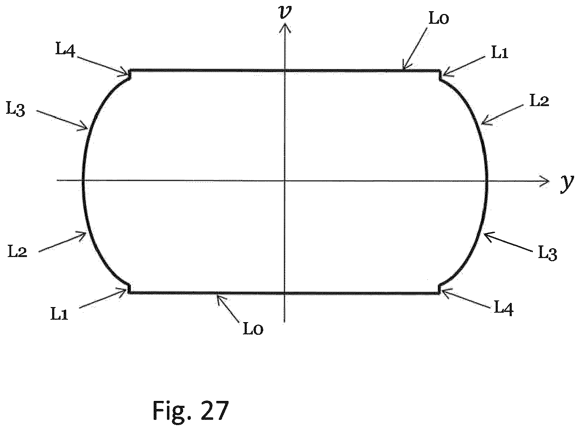

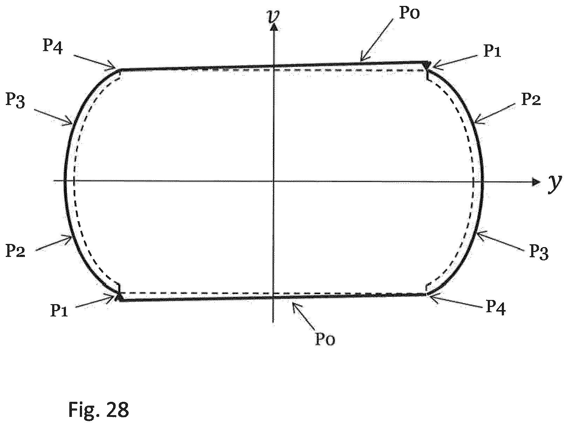

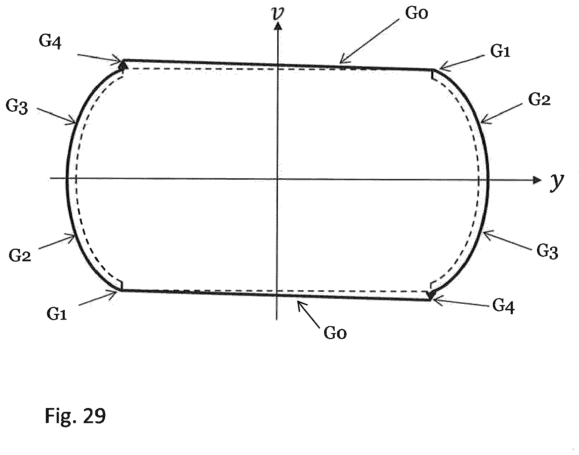

Die Fig. 27,28 und 29 veranschaulichen Phasenportraits im Leerlauf, im Pumpbetrieb (Fig. 28) sowie im Generatorbetrieb 8Fig. 29).

Im Leerlauf, Fig. 27, bewegt sich der Kolben mit konstanter Geschwindigkeit, was durch waagrechte Linien Lo angegeben ist. In der Phase L1 wird das Gasvolumen im Hubraum komprimiert, und danach wird das Gasvolumen im Hubraum und in der Feder - in der Phase L2 - komprimiert; in der Phase L3 expandieren das Gasvolumen im Hubraum und in der Feder, und in der Phase L4 expandiert das Gasvolumen im Hubraum.

Im Einzelnen sind die jeweiligen Phasen wie folgt:

L0: Der Kolben bewegt sich mit konstanter Geschwindigkeit
L1: Das Gasvolumen im Hubraum wird komprimiert
L2: Das Gasvolumen im Hubraum und in der Feder werden komprimiert
L3: Das Gasvolumen im Hubraum und in der Feder expandieren
L4: Das Gasvolumen im Hubraum expandiert
Es findet kein Energieaustausch mit der Umgebung statt, (Verlustfreiheit vorausgesetzt).

Es findet im Leerlauf kein Energieaustausch mit der Umgebung statt, Verlustfreiheit vorausgesetzt.

In Fig. 28 ist ein Phasenportrait im Pumpbetrieb veranschaulicht, wobei anfangs, Phase P0, der Kolben durch die Lorenzkraft beschleunigt wird und elektrische Energie aufnimmt. Während der Kolben auf einer Seite die Luft verdichtet, wird auf der anderen Seite Luft aus der Umgebung angesaugt.

In der Phase P1 wird das Gasvolumen im Hubraum komprimiert. Danach wird in der Phase D2 das Gasvolumen im Hubraum sowie in der Feder komprimiert; der Primärstrom ist höher, daher ist die Auslenkung größer. Der Kanal zum Hauptspeicher wird beim Punkt maximaler Auslenkung geöffnet. Weil der Federdruck höher ist, strömt Luft aus dem Hubraum in den Hauptspeicher.

In der Phase P3 expandiert das Gasvolumen in der Feder; danach befindet sich gemäß Phase P4 im Hubraum kein komprimiertes Gasvolumen, daher findet keine weitere Expansion statt.

Zur Veranschaulichung ist in Fig. 28 (Phasenportrait im Pumpbetrieb) das Phasenportrait im Leerlauf (s. Fig. 27) zusätzlich mit gestrichelter Linie veranschaulicht.

Dies trifft auch auf das Phasenportrait im Generatorbetrieb gemäß Fig. 29 zu. Im Übrigen können die dort angegebenen Phasen wie folgt erläutert werden.

G0: Der Kolben wird durch die Lorentzkraft gebremst und leistet elektrische Arbeit.
G1: Das Gasvolumen im Hubraum wird nicht komprimiert sondern an die Umgebung abgegeben.
G2: Der Druck in der Feder ist geringer, daher ist die Auslenkung größer. Der Kanal zum Hauptspeicher wird beim Punkt maximaler Auslenkung geöffnet. Weil der Federdruck geringer ist, strömt Luft aus dem Hauptspeicher in den Hubraum.
G3: Das Gasvolumen im Hubraum und in der Feder expandieren
G4: Das Gasvolumen im Hubraum expandiert und beschleunigt den Kolben auf einen Wert über dem Leerlauf

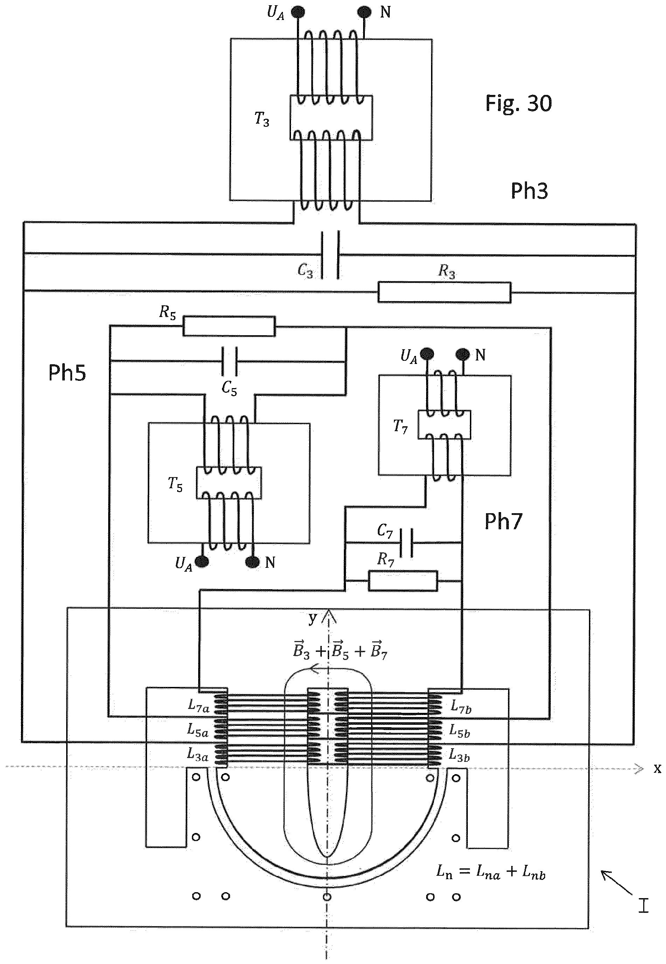

In Fig. 30 ist eine dreiphasen-Anordnung mit Phasen Ph3, Ph5 und Ph7, jeweils mit zugehörigem Transformator T3, T5 bzw. T7, Kondensator C3, C5 bzw. C7 und Widerstand R3, R5 bzw. R7 veranschaulicht, wobei die jeweiligen Kreise Ph3, Ph5 und Ph7 mit im vorliegenden Beispiel 3 Wicklungen L3, L5 und L7 auf den inneren Schenkeln einer Induktionspumpe I verbunden sind. An den jeweiligen Transformatorausgängen liegt die Ausgangsspannung UA an.

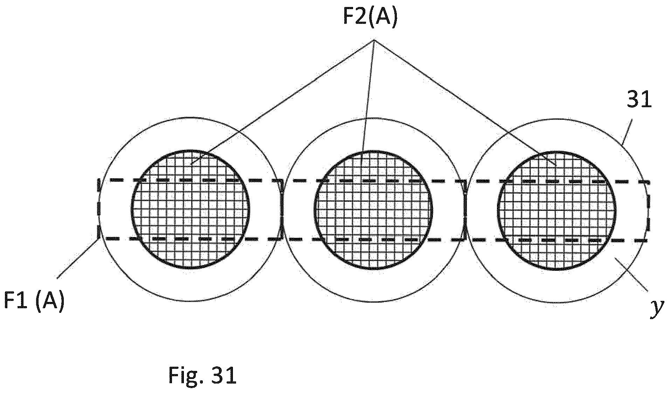

In Fig. 31 ist schließlich schematisch eine Reihe von - hier bloß 3 - Zylindern mit gleicher Fläche (s. die karierten Flächen, wie die Fläche des - in Fig. 31 strichliert eingezeichneten - rechteckigen Spalts am oberen Abschluss des Hubraums. Der rechteckige Querschnitt des jeweiligen Spalts bzw. der Summe der Spalten, wie in Fig. 31 strichliert gezeichnet, entspricht wie erwähnt der Summe der kreisförmigen Querschnitte, nämlich den Kolbenquerschnitten beim Auftreffen auf die Druckluftfeder. Beide Querschnitte - der rechteckige Querschnitt und der schraffierte kreisförmige Querschnitt - müssen die selbe Fläche haben, und der in Fig. 31 veranschaulichte äußere Kreis stellt die Außenseite der jeweiligen Druckluftfeder dar. Der Bereich zwischen den beiden konzentrischen Kreisen, in Fig. 31 mit Y bezeichnet, entspricht der Stahlhülle der Druckluftfedern.

Zur besseren Veranschaulichung ist in Fig. 31 die strichliert gezeichnete rechteckige Fläche mit F1(A) und die Summe der kreisförmigen, kariert dargestellten Flächen mit F2(A) bezeichnet.

**Patentansprüche**

1. Druckluftspeicherkraftwerk (100) mit

   - einem Druckluftspeicher (2),
   - einem elektrischen Ein-/Ausgangskreis (4) mit Klemmen,
   - Kompressions- und Expansionsmitteln, die eine Kolbenpumpe (200) mit einem flüssigen Kolben aufweisen, die zwischen einem Pumpbetrieb und einem Generatorbetrieb umschaltbar ist,
   - Elektromagnetmitteln (LOA, L0B, L1A, L1B) und
   - mit einem Kern aus Trafoblechen,

   **dadurch gekennzeichnet, dass**

   zwei äußere Schenkel (a, d) und zwei innere Schenkel (b, c) vorgesehen sind, welche zwei äußeren (a, d) und zwei inneren Schenkel (b, c) jeweils U-förmig miteinander verbunden sind, wobei an der Unterseite der inneren Schenkel (b, c) ein zumindest abschnittsweise halbkreisförmiger Spalt (101) durch Stapeln gleichförmiger Trafobleche entlang einer Achse (z) gebildet ist, wobei der Spalt (101) mit einer elektrisch und thermisch leitfähigen Flüssigkeit befüllt ist, welche nicht magnetisierbar ist und den flüssigen Kolben bildet,
   wobei an der Vorderseite, der Innenseite und der Rückseite der inneren Schenkel (b, c) in einem unteren Bereich (y<0) Kupferplatten angebracht sind, die gemeinsam mit der Flüssigkeit im Spalt (101) einen elektrischen Kurzschluss bilden,
   wobei die inneren Schenkeln (b, c) einen Transformator mit einer primärseitigen Wicklung (L1) mit einem sekundärseitigen Kurzschluss bilden, wobei zwei Spulen (L1A, L1B) der primärseitigen Wicklung (L1) gleichsinnig gewickelt und so miteinander verbunden sind, dass sich bei einer angelegten Wechselspannung ihre magnetischen Flüsse (B1A, B1B) zu einem Gesamtfluss (B1) der primärseitigen Wicklung (L1) addieren, wobei weiters an den äußeren Schenkeln (a, d) Gleichfeld-Spulen (L0A, L0B) vorgesehen sind, die baugleich hinsichtlich Windungszahl und Drahtstärke sind, wobei Wicklungssinn und Stromrichtung der Gleichfeld-Spulen (LOA, L0B) so gewählt sind, dass der von den Gleichfeld-Spulen (LOA, L0B) erzeugte magnetische Fluss (B0A, B0B) im Spalt (101) stets in dieselbe Richtung zeigt, wobei ein von den Gleichfeld-Spulen (LOA, L0B) erzeugter magnetischer Fluss (B0) ein reines Gleichfeld ist.

2. Druckluftspeicherkraftwerk (100) nach Anspruch 1, **dadurch gekennzeichnet, dass** weitere Spulen (L2A, L2B) an den äußeren Schenkeln (a, d) oder an den inneren Schenkeln (b, c) vorgesehen sind, die gemeinsam eine Komponente (B2) des magnetischen Flusses im Spalt (101) erzeugen, welche eine sinusförmige Wechselgröße mit einer insbesondere höheren Harmonischen der Netzfrequenz, vorzugsweise mit einer doppelten Netzfrequenz (2f), ist, wobei der magnetische Summenfluss (BS) aus den magnetischen Flüssen (B0, B2) im Spalt (101) allgemein senkrecht auf die Grenzflächen des Spalts (101) steht und einen Gleichanteil und einen sinusförmigen Wechselanteil mit der insbesondere höheren Harmonischen der Netzfrequenz, vorzugsweise mit der doppelten Netzfrequenz, aufweist.

3. Druckluftspeicherkraftwerk (100) nach Anspruch 1 oder 2, **dadurch gekennzeichnet, dass** eine Änderung des magnetischen Flusses (B1) eine mit dem Kern (18) verkettete Wechselspannung in der im Spalt (101) befindlichen Flüssigkeit induziert.

4. Druckluftspeicherkraftwerk (100) nach einem der Ansprüche 1 bis 3, **dadurch gekennzeichnet, dass** an den Außenseiten der Trafobleche und zwischen ihnen in vorzugsweise regelmäßigen Abständen Stahlplatten angeordnet sind.

5. Druckluftspeicherkraftwerk (100) nach Anspruch 4, **dadurch gekennzeichnet, dass** die Stahlplatten die dieselbe Form wie die Trafobleche haben.

6. Druckluftspeicherkraftwerk (100) nach Anspruch 4, **dadurch gekennzeichnet, dass** die Stahlplatten im Bereich der inneren Schenkel (b, c) durch den Spalt (101) durchgehen, wodurch mehrere parallele Spalten gebildet sind.

7. Druckluftspeicherkraftwerk (100) nach einem der Ansprüche 1 bis 6, **dadurch gekennzeichnet, dass** der halbkreisförmige Spalt (101) an seinen Enden durch gerade Abschnitte in einem oberen Bereich (y>0) zu einer U-Form verlängert ist.

8. Druckluftspeicherkraftwerk (100) nach Anspruch 7, **dadurch gekennzeichnet, dass** der flüssige Kolben einen Hubraum als Teil des Spaltes (101) aufweist und sich an einem oberen Ende des Hubraums ein Druckluftventil (67') befindet, das seitlich durch ein Saugventil (68) ergänzt ist.

9. Druckluftspeicherkraftwerk (100) nach einem der Ansprüche 1 bis 8, **dadurch gekennzeichnet, dass** der Spalt (101) mittels einer dazwischenliegenden Trennwand in zwei Spalte geteilt ist.

Fig. 1A

U = 220 kV

C

L

R

100

Fig. 1

Fig. 2

Fig. 3

Fig. 4

Fig. 5

Fig. 6

$$N*I1 = \Phi1*Rm1 - \Phi3*Rm3$$

$$I2 = \Phi2*Rm2 - \Phi3*Rm3$$

$$0 = \Phi1 + \Phi2 + \Phi3$$

Fig. 7

Fig. 8

Fig. 9

Fig. 10

Fig. 11

Fig.12

Fig.13

Fig.14

Fig.15

Fig.16

Fig.17

Fig.18

Fig.19

Fig. 20

Fig. 21

Fig. 22

Fig. 23

Fig. 24

EP 3 790 176 A1

Fig. 25

Fig. 26

Fig. 27

Fig. 28

Fig. 29

Fig. 30

Fig. 31

Europäisches
Patentamt

European
Patent Office

Office européen
des brevets

# EUROPÄISCHER RECHERCHENBERICHT

**Nummer der Anmeldung**

EP 20 20 4526

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | FR 1 322 210 A (ALAIS, PIERRE [FR]) 29. März 1963 (1963-03-29) * Seite 1, linke Spalte, Absatz 1 * * Seite 1, rechte Spalte, Absatz 2 - Absatz 3 * * Seite 2, linke Spalte, Absatz 2 - Absatz 3 * * Seite 2, rechte Spalte, vorletzter Absatz * * Ansprüche 1-7 * | 1-9 | INV. H02K44/08 H02K44/02 H02K44/06 H02K44/16 F04B7/00 F04B23/02 F04B35/04 F04B39/00 |
| A | US 2014/049351 A1 (CARSTEN BRUCE W [US]) 20. Februar 2014 (2014-02-20) * Absatz [0001] * * Absatz [0010] - Absatz [0012] * * Absatz [0018]; Abbildung 5 * | 1-9 | |
| A | GB 506 280 A (SIEMENS AG) 24. Mai 1939 (1939-05-24) * Seite 3, Zeile 51 - Zeile 128; Abbildung 3 * | 1-9 | |
| A | WO 2007/102742 A1 (RESONATOR AS [NO]; BRENNVALL JON EIRIK [NO]) 13. September 2007 (2007-09-13) * Seite 1, Zeile 3 - Seite 2, Zeile 18 * | 1-9 | RECHERCHIERTE SACHGEBIETE (IPC) H02K H01F F04B |
| A | WO 2014/169312 A1 (SCHNEIDER ALEXANDER [AT]) 23. Oktober 2014 (2014-10-23) * Seite 8, Zeile 20 - Zeile 25 * | 1-9 | |
| A | US 3 219 851 A (KIDWELL ROBERT P) 23. November 1965 (1965-11-23) * Spalte 1, Zeile 8 - Spalte 2, Zeile 17 * * Spalte 3, Zeile 52 - Spalte 4, Zeile 20; Abbildungen 2, 2a * | 1-9 | |

-/--

Der vorliegende Recherchenbericht wurde für alle Patentansprüche erstellt

| Recherchenort | Abschlußdatum der Recherche | Prüfer |
|---|---|---|
| Den Haag | 12. Januar 2021 | Moyaerts, Laurent |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

Seite 1 von 2

Europäisches
Patentamt

European
Patent Office

Office européen
des brevets

# EUROPÄISCHER RECHERCHENBERICHT

**Nummer der Anmeldung**

EP 20 20 4526

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 4 067 667 A (WHITE HARLAN VERNON) 10. Januar 1978 (1978-01-10) * Spalte 1, Zeile 11 - Zeile 14 * * Spalte 2, Zeile 3 - Zeile 10 * * Spalte 5, Zeile 12 - Zeile 28; Abbildung 1 * ----- | 1-9 | |
| A | US 4 353 220 A (CURWEN PETER W ET AL) 12. Oktober 1982 (1982-10-12) * Spalte 1, Zeile 8 - Zeile 30 * * Spalte 5, Zeile 10 - Zeile 26; Abbildung 1 * * Spalte 8, Zeile 16 - Zeile 27 * ----- | 1-9 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 12. Januar 2021 | Moyaerts, Laurent |

EPO FORM 1503 03.82 (P04C03)

## ANHANG ZUM EUROPÄISCHEN RECHERCHENBERICHT
### ÜBER DIE EUROPÄISCHE PATENTANMELDUNG NR.

EP 20 20 4526

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-01-2021

| Im Recherchenbericht angeführtes Patentdokument | | Datum der Veröffentlichung | Mitglied(er) der Patentfamilie | | Datum der Veröffentlichung |
|---|---|---|---|---|---|
| FR 1322210 | A | 29-03-1963 | KEINE | | |
| US 2014049351 | A1 | 20-02-2014 | KEINE | | |
| GB 506280 | A | 24-05-1939 | KEINE | | |
| WO 2007102742 | A1 | 13-09-2007 | CA | 2644469 A1 | 13-09-2007 |
| | | | EA | 200801818 A1 | 27-02-2009 |
| | | | EP | 1992058 A1 | 19-11-2008 |
| | | | NO | 325266 B1 | 17-03-2008 |
| | | | US | 2009058201 A1 | 05-03-2009 |
| | | | WO | 2007102742 A1 | 13-09-2007 |
| WO 2014169312 | A1 | 23-10-2014 | AT | 514221 A2 | 15-11-2014 |
| | | | CA | 2909709 A1 | 23-10-2014 |
| | | | CN | 105452657 A | 30-03-2016 |
| | | | EP | 2986852 A1 | 24-02-2016 |
| | | | ES | 2621427 T3 | 04-07-2017 |
| | | | HU | E032641 T2 | 30-10-2017 |
| | | | RU | 2015149642 A | 23-05-2017 |
| | | | US | 2016079830 A1 | 17-03-2016 |
| | | | WO | 2014169312 A1 | 23-10-2014 |
| US 3219851 | A | 23-11-1965 | KEINE | | |
| US 4067667 | A | 10-01-1978 | US | 3937600 A | 10-02-1976 |
| | | | US | 4067667 A | 10-01-1978 |
| US 4353220 | A | 12-10-1982 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- WO 2014169312 A1
- EP 2450549 A2
- DE 2636417 A1
- DE 2541501 A1
- DD 118455 A1
- DE 2536447 B2
- DE 2615439 A1
- DE 3428041 A1
- EP 364106 B1

- US 4630436 A
- US 4523432 A
- US 4765142 A
- EP 2489840 A1
- DE 19728199 A1
- US 2258415 A
- WO 2014169312 A
- US 3517229 A
- US 2008072597 A1
- WO 2008139267 A1